# EUROPEAN PATENT APPLICATION

(11) **EP 4 451 713 A1**
(43) Date of publication of application: **23.10.2024**
(21) Application number: 22921768.2
(22) Date of filing: 30.12.2022
(51) Int. Cl.: H04W 4/06

(54) **VERIFICATION METHOD, COMMUNICATION APPARATUS, AND COMMUNICATION SYSTEM**

(30) Priority: 19.01.2022 CN 202210062467
(71) Applicant: Huawei Technologies Co., Ltd., Shenzhen, Guangdong 518129 (CN)
(72) Inventor: GUO, Longhua, Shenzhen, Guangdong 518129 (CN); WU, Rong, Shenzhen, Guangdong 518129 (CN)
(74) Representative: Pfenning, Meinig & Partner mbB
(86) International application number: PCT/CN2022/144284
(87) International publication number: WO 2023/138349

(57) **Abstract**

Embodiments of this application provide a verification method, a communication apparatus, and a communication system. The method includes: receiving identification information of a first user service from a terminal device, where the first user service is a multicast service; sending a request message to a first network element, where the request message includes identification information of the terminal device and the identification information of the first user service, and the request message is used to request to verify whether to allow the terminal device to use the first user service; and receiving a verification result from the first network element, where the verification result indicates that the terminal device is allowed to use the first user service, or indicates that the terminal device is not allowed to use the first user service. In the solutions, a multicast/broadcast service transport function network element may verify whether to allow the terminal device to use a user service, and the multicast/broadcast service transport function network element may determine a data transmission manner between the multicast/broadcast service transport function network element and the terminal device based on a verification result, to improve security of data transmission.

## Description

### CROSS-REFERENCE TO RELATED APPLICATIONS

This application claims priority to Chinese Patent Application No. 202210062467.3, filed with the China National Intellectual Property Administration on January 19, 2022 and entitled "VERIFICATION METHOD, COMMUNICATION APPARATUS, AND COMMUNICATION SYSTEM", which is incorporated herein by reference in its entirety.

### TECHNICAL FIELD

Embodiments of this application relate to the field of communication technologies, and in particular, to a verification method, a communication apparatus, and a communication system.

### BACKGROUND

In a 3rd generation partnership project (3rd generation partnership project, 3GPP) network, a user service (or an application, where the user service is used as an example below for description) has a requirement of sending same data to a plurality of terminal devices, that is, point-to-multipoint data transmission is needed.

Through establishment of a multicast/broadcast/unicast session, the network provides a bearer shared by a plurality of receivers, and a sender needs to send only one piece of data. The sent data is replicated on the network side as needed and is transmitted to the plurality of receivers, or one piece of data is sent to the plurality of receivers in a multicast transmission manner. For example, the user service is a sports game, and the user service is carried in a plurality of multicast sessions and transmitted to a plurality of terminal devices, where one multicast session is used for retransmission, and another multicast session is used for flow data transmission.

In 5th generation (5th generation, 5G) communication, a multicast/broadcast service transport function (Multicast/Broadcast Service Transport Function, MBSTF) network element is introduced during processing of a multicast service. The MBSTF network element is configured to support processing and distribution of a multicast service data flow.

How to improve security of data transmission between the terminal device and the MBSTF network element needs to be resolved.

### SUMMARY

Embodiments of this application provide a verification method, a communication apparatus, and a communication system, to improve security of data transmission.

According to a first aspect, an embodiment of this application provides a verification method. The method may be performed by a multicast/broadcast service transport function network element or a module (for example, a chip) used in the multicast/broadcast service transport function network element. The method includes: receiving identification information of a first user service from a terminal device, where the first user service is a multicast service; sending a request message to a first network element, where the request message includes identification information of the terminal device and the identification information of the first user service, and the request message is used to request to verify whether to allow the terminal device to use the first user service; and receiving a verification result from the first network element, where the verification result indicates that the terminal device is allowed to use the first user service, or indicates that the terminal device is not allowed to use the first user service.

In the foregoing solution, the multicast/broadcast service transport function network element may verify whether to allow the terminal device to use a user service, and the multicast/broadcast service transport function network element may determine a data transmission manner between the multicast/broadcast service transport function network element and the terminal device based on a verification result, to improve security of data transmission.

In a possible implementation method, the sending a request message to a first network element specifically includes: after an authentication parameter from the terminal device passes authentication, sending the request message to the first network element.

In the foregoing solution, two-step verification may be performed on the terminal device, where identity security of the terminal device is verified, and at the same time, whether the terminal device is allowed to use the user service is verified. This helps further improve the security of the data transmission.

In a possible implementation method, performing authentication on the authentication parameter from the terminal device specifically includes: receiving a key identifier and the authentication parameter from the terminal device; obtaining an application key corresponding to the key identifier; and performing authentication on the authentication parameter based on the application key.

In a possible implementation method, when the authentication parameter from the terminal device passes the authentication, and the verification result indicates that the terminal device is allowed to use the first user service, information indicating that the terminal device is allowed to use the first user service is sent to the terminal device; or when the authentication parameter from the terminal device passes the authentication, and the verification result indicates that the terminal device is not allowed to use the first user service, information indicating that the terminal device is not allowed to use the first user service is sent to the terminal device.

In a possible implementation method, when the verification result indicates that the terminal device is allowed to use the first user service, information indicating that the terminal device is allowed to use the first user service is sent to the terminal device; or when the verification result indicates that the terminal device is not allowed to use the first user service, information indicating that the terminal device is not allowed to use the first user service is sent to the terminal device.

In a possible implementation method, the sending a request message to a first network element specifically includes: when determining that identification information of a user service that is allowed to be used by the terminal device is not stored, sending the request message to the first network element.

In this solution, when the multicast/broadcast service transport function network element locally stores the identification information of the user service that is allowed to be used by the terminal device, the multicast/broadcast service transport function network element may not need to request, from the first network element, the identification information of the user service that is allowed to be used by the terminal device, to reduce signaling exchange and overheads, and speed up verification.

In a possible implementation method, the sending a request message to a first network element specifically includes: sending the request message to the first network element via a network exposure function network element or a multicast/broadcast service function network element.

In a possible implementation method, the first network element is a unified data management network element, an application function network element, or a multicast/broadcast service function network element.

According to a second aspect, an embodiment of this application provides a verification method. The method may be performed by a multicast/broadcast service transport function network element or a module (for example, a chip) used in the multicast/broadcast service transport function network element. The method includes: receiving identification information of a first user service from a terminal device, where the first user service is a multicast service; sending a request message to a first network element, where the request message includes identification information of the terminal device, and the request message is used to request identification information of a user service that is allowed to be used by the terminal device; receiving, from the first network element, the identification information of the user service that is allowed to be used by the terminal device; and verifying, based on the identification information of the first user service and the identification information of the user service that is allowed to be used by the terminal device, whether to allow the terminal device to use the first user service.

In the foregoing solution, the multicast/broadcast service transport function network element may verify whether to allow the terminal device to use a user service, and the multicast/broadcast service transport function network element may determine a data transmission manner between the multicast/broadcast service transport function network element and the terminal device based on a verification result, to improve security of data transmission.

In a possible implementation method, the verifying, based on the identification information of the first user service and the identification information of the user service that is allowed to be used by the terminal device, whether to allow the terminal device to use the first user service specifically includes: if the identification information of the user service that is allowed to be used by the terminal device includes the identification information of the first user service, determining to allow the terminal device to use the first user service; or if the identification information of the user service that is allowed to be used by the terminal device does not include the identification information of the first user service, determining not to allow the terminal device to use the first user service.

In a possible implementation method, the sending a request message to a first network element specifically includes: after an authentication parameter from the terminal device passes authentication, sending the request message to the first network element.

In the foregoing solution, two-step verification may be performed on the terminal device, where identity security of the terminal device is verified, and at the same time, whether the terminal device is allowed to use the user service is verified. This helps further improve the security of the data transmission.

In a possible implementation method, when the authentication parameter from the terminal device passes the authentication, and the verification result indicates that the terminal device is allowed to use the first user service, information indicating that the terminal device is allowed to use the first user service is sent to the terminal device; or when the authentication parameter from the terminal device passes the authentication, and the verification result indicates that the terminal device is not allowed to use the first user service, information indicating that the terminal device is not allowed to use the first user service is sent to the terminal device.

In a possible implementation method, when the verification result indicates that the terminal device is allowed to use the first user service, information indicating that the terminal device is allowed to use the first user service is sent to the terminal device; or when the verification result indicates that the terminal device is not allowed to use the first user service, information indicating that the terminal device is not allowed to use the first user service is sent to the terminal device.

In a possible implementation method, the sending a request message to a first network element specifically includes: when determining that the identification information of the user service that is allowed to be used by the terminal device is not stored, sending the request message to the first network element.

In this solution, when the multicast/broadcast service transport function network element locally stores the identification information of the user service that is allowed to be used by the terminal device, the multicast/broadcast service transport function network element may not need to request, from the first network element, the identification information of the user service that is allowed to be used by the terminal device, to reduce signaling exchange and overheads, and speed up verification.

In a possible implementation method, the sending a request message to a first network element specifically includes: sending the request message to the first network element via a network exposure function network element or a multicast/broadcast service function network element.

In a possible implementation method, the first network element is a unified data management network element, an application function network element, or a multicast/broadcast service function network element.

According to a third aspect, an embodiment of this application provides a verification method. The method may be performed by a unified data management network element, an application function network element, a module (for example, a chip) used in the unified data management network element, or a module (for example, a chip) used in the application function network element. The method includes: receiving a request message from a multicast/broadcast service transport function network element, where the request message includes identification information of a terminal device and identification information of a first user service, and the request message is used to request to verify whether to allow the terminal device to use the first user service; verifying, based on the identification information of the first user service and identification information of a user service that is allowed to be used by the terminal device, whether to allow the terminal device to use the first user service; and sending a verification result to the multicast/broadcast service transport function network element.

In the foregoing solution, the unified data management network element may verify whether to allow the terminal device to use a user service, and send a verification result to the multicast/broadcast service transport function network element, so that the multicast/broadcast service transport function network element can determine a data transmission manner between the multicast/broadcast service transport function network element and the terminal device based on the verification result, to improve security of data transmission.

In a possible implementation method, the verifying, based on the identification information of the first user service and identification information of a user service that is allowed to be used by the terminal device, whether to allow the terminal device to use the first user service specifically includes: if the identification information of the user service that is allowed to be used by the terminal device includes the identification information of the first user service, generating the verification result, where the verification result indicates that the terminal device is allowed to use the first user service; or if the identification information of the user service that is allowed to be used by the terminal device does not include the identification information of the first user service, generating the verification result, where the verification result indicates that the terminal device is not allowed to use the first user service.

In a possible implementation method, before the request message is received from the multicast/broadcast service transport function network element, the identification information of the user service that is allowed to be used by the terminal device is received from the application function network element.

According to a fourth aspect, an embodiment of this application provides a verification method. The method may be performed by a multicast/broadcast service transport function network element or a module (for example, a chip) used in the multicast/broadcast service transport function network element. The method includes: receiving, from an application function network element, identification information of a user service and identification information of a terminal device that is allowed to use the user service, where the user service is a multicast service; receiving the identification information of the user service from a first terminal device; and verifying, based on identification information of the first terminal device and the identification information of the terminal device that is allowed to use the user service, whether to allow the first terminal device to use the user service.

In the foregoing solution, the multicast/broadcast service transport function network element may verify whether to allow the terminal device to use a user service, and the multicast/broadcast service transport function network element may determine a data transmission manner between the multicast/broadcast service transport function network element and the terminal device based on a verification result, to improve security of data transmission.

In a possible implementation method, the verifying, based on identification information of the first terminal device and the identification information of the terminal device that is allowed to use the user service, whether to allow the first terminal device to use the user service specifically includes: if the identification information of the terminal device that is allowed to use the user service includes the identification information of the first terminal device, determining to allow the first terminal device to use the user service; or if the identification information of the terminal device that is allowed to use the user service does not include the identification information of the first terminal device, determining not to allow the first terminal device to use the user service.

In a possible implementation method, the verifying, based on identification information of the first terminal device and the identification information of the terminal device that is allowed to use the user service, whether to allow the first terminal device to use the user service specifically includes: after an authentication parameter from the first terminal device passes authentication, verifying, based on the identification information of the first terminal device and the identification information of the terminal device that is allowed to use the user service, whether to allow the first terminal device to use the user service.

In the foregoing solution, two-step verification may be performed on the terminal device, where identity security of the terminal device is verified, and at the same time, whether the terminal device is allowed to use the user service is verified. This helps further improve the security of the data transmission.

In a possible implementation method, when the authentication parameter from the first terminal device passes the authentication, and the first terminal device is determined to be allowed to use the user service, information indicating that the first terminal device is allowed to use the user service is sent to the first terminal device; or when the authentication parameter from the first terminal device passes the authentication, and the first terminal device is determined not to be allowed to use the user service, information indicating that the first terminal device is not allowed to use the user service is sent to the first terminal device.

In a possible implementation method, when the first terminal device is determined to be allowed to use the user service, information indicating that the first terminal device is allowed to use the user service is sent to the first terminal device; or when the first terminal device is determined not to be allowed to use the user service, information indicating that the first terminal device is not allowed to use the user service is sent to the first terminal device.

According to a fifth aspect, an embodiment of this application provides a verification method. The method may be performed by a multicast/broadcast service transport function network element or a module (for example, a chip) used in the multicast/broadcast service transport function network element. The method includes: receiving identification information of a user service and a first token from a terminal device, where the user service is a multicast service; obtaining one or more tokens corresponding to the identification information of the user service; and verifying, based on the first token and the one or more tokens, whether to allow the terminal device to use the user service.

In the foregoing solution, the multicast/broadcast service transport function network element may verify whether to allow the terminal device to use a user service, and the multicast/broadcast service transport function network element may determine a data transmission manner between the multicast/broadcast service transport function network element and the terminal device based on a verification result, to improve security of data transmission.

In a possible implementation method, the verifying, based on the first token and the one or more tokens, whether to allow the terminal device to use the user service specifically includes: if the one or more tokens include the first token, determining to allow the terminal device to use the user service; or if the one or more tokens do not include the first token, determining not to allow the terminal device to use the user service.

In a possible implementation method, before the identification information of the user service and the first token are received from the terminal device, the identification information of the user service and the one or more tokens corresponding to the identification information of the user service are received from an application function network element, a network exposure function network element, or a multicast/broadcast service function network element.

According to a sixth aspect, an embodiment of this application provides a verification method. The method may be performed by a terminal device or a module (for example, a chip) used in the terminal device. The method includes: sending identification information of a multicast service session to a session management network element; receiving, from the session management network element, a first token corresponding to the multicast service session; and sending, to a multicast/broadcast service transport function network element, the first token and identification information of a user service corresponding to the multicast service session, where the user service is a multicast service, and the first token is used to verify whether to allow the terminal device to use the user service. In the foregoing solution, the terminal device sends, to the multicast/broadcast service transport function network element, the first token and the identification information of the user service corresponding to the multicast service session. The first token is used to verify whether to allow the terminal device to use the user service. Then, the multicast/broadcast service transport function network element may verify, based on the first token, whether to allow the terminal device to use a user service, and the multicast/broadcast service transport function network element may determine a data transmission manner between the multicast/broadcast service transport function network element and the terminal device based on a verification result, to improve security of data transmission.

In a possible implementation method, the sending identification information of a multicast service session to a session management network element specifically includes: sending a request message to the session management network element, where the request message includes the identification information of the multicast service session, and the request message is used to request to join the multicast service session.

In the foregoing solution, the first token is sent by using a procedure in which the terminal device joins the multicast session, and no separate procedure needs to be additionally introduced to send the first token. Therefore, additional signaling overheads can be reduced.

In a possible implementation method, the receiving, from the session management network element, a first token corresponding to the multicast service session specifically includes: receiving a response message of the request message from the session management network element, where the response message includes the first token.

In a possible implementation method, the receiving, from the session management network element, a first token corresponding to the multicast service session specifically includes: receiving a session modification command message from the session management network element, where the session modification command message includes the first token.

According to a seventh aspect, an embodiment of this application provides a communication apparatus. The apparatus may be a multicast/broadcast service transport function network element or a module (for example, a chip) used in the multicast/broadcast service transport function network element. The apparatus has a function of implementing any implementation method of the first aspect, the second aspect, the fourth aspect, and the fifth aspect. The function may be implemented by hardware, or may be implemented by hardware executing corresponding software. The hardware or the software includes one or more modules corresponding to the function.

According to an eighth aspect, an embodiment of this application provides a communication apparatus. The apparatus may be a first network element or a module (for example, a chip) in the first network element, where the first network element may be a unified data management network element, an application function network element, or a multicast/broadcast service function network element. The apparatus has a function of implementing any implementation method of the third aspect. The function may be implemented by hardware, or may be implemented by hardware executing corresponding software. The hardware or the software includes one or more modules corresponding to the function.

According to a ninth aspect, an embodiment of this application provides a communication apparatus. The apparatus may be a terminal device or a module (for example, a chip) in the terminal device. The apparatus has a function of implementing any implementation method of the sixth aspect. The function may be implemented by hardware, or may be implemented by hardware executing corresponding software. The hardware or the software includes one or more modules corresponding to the function.

According to a tenth aspect, an embodiment of this application provides a communication apparatus, including a processor and a memory. The memory is configured to store computer instructions. When the apparatus runs, the processor executes the computer instructions stored in the memory, to enable the apparatus to perform any implementation method of the first aspect to the sixth aspect.

According to an eleventh aspect, an embodiment of this application provides a communication apparatus, including a unit or a means (means) configured to perform steps of any implementation method of the first aspect to the sixth aspect.

According to a twelfth aspect, an embodiment of this application provides a communication apparatus, including a processor and an interface circuit. The processor is configured to: communicate with another apparatus through the interface circuit, and perform any implementation method of the first aspect to the sixth aspect. There are one or more processors.

According to a thirteenth aspect, an embodiment of this application provides a communication apparatus, including a processor coupled to a memory. The processor is configured to invoke a program stored in the memory, to perform any implementation method of the first aspect to the sixth aspect. The memory may be located inside or outside the apparatus. In addition, there may be one or more processors.

According to a fourteenth aspect, an embodiment of this application further provides a computer-readable storage medium. The computer-readable storage medium stores instructions. When the instructions are run on a communication apparatus, any implementation method of the first aspect to the sixth aspect is performed.

According to a fifteenth aspect, an embodiment of this application further provides a computer program product. The computer program product includes a computer program or instructions. When the computer program or the instructions are run by a communication apparatus, any implementation method of the first aspect to the sixth aspect is performed.

According to a sixteenth aspect, an embodiment of this application further provides a chip system, including a processor, configured to perform any implementation method of the first aspect to the sixth aspect.

According to a seventeenth aspect, an embodiment of this application further provides a communication system, including a multicast/broadcast service transport function network element configured to perform any implementation method of the first aspect, and a first network element configured to perform any implementation method of the third aspect.

According to an eighteenth aspect, an embodiment of this application further provides a communication system, including a first network element and a multicast/broadcast service transport function network element configured to perform any implementation method of the second aspect. The first network element is configured to: receive a request message from the multicast/broadcast service transport function network element, where the request message includes identification information of a terminal device, and the request message is used to request identification information of a user service that is allowed to be used by the terminal device; and send, to the multicast/broadcast service transport function network element, the identification information of the user service that is allowed to be used by the terminal device.

According to a nineteenth aspect, an embodiment of this application further provides a communication system, including an application function network element and a multicast/broadcast service transport function network element configured to perform any implementation method of the fourth aspect. The application function network element is configured to send, to the multicast/broadcast service transport function network element, identification information of a user service and identification information of a terminal device that is allowed to use the user service, where the user service is a multicast service.

### BRIEF DESCRIPTION OF DRAWINGS

FIG. 1 is a diagram of a 5G network architecture that is based on a service-based architecture;
FIG. 2 is a diagram of a multicast/broadcast service architecture that is based on a service-based 5G system;
FIG. 3(a) is a schematic flowchart of a verification method according to an embodiment of this application;
FIG. 3(b) is a schematic flowchart of a verification method according to an embodiment of this application;
FIG. 3(c) is a schematic flowchart of a verification method according to an embodiment of this application;
FIG. 3(d) is a schematic flowchart of a verification method according to an embodiment of this application;
FIG. 4A and FIG. 4B are a schematic flowchart of a method for establishing a multicast service for transmission according to an embodiment of this application;

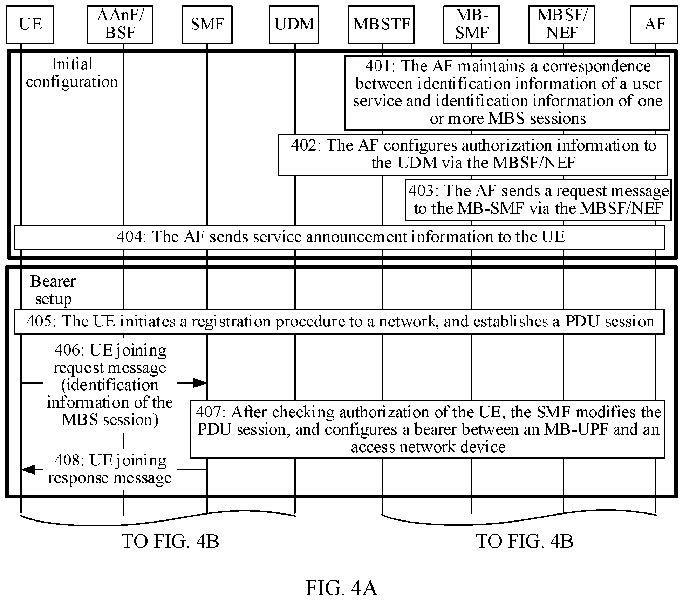

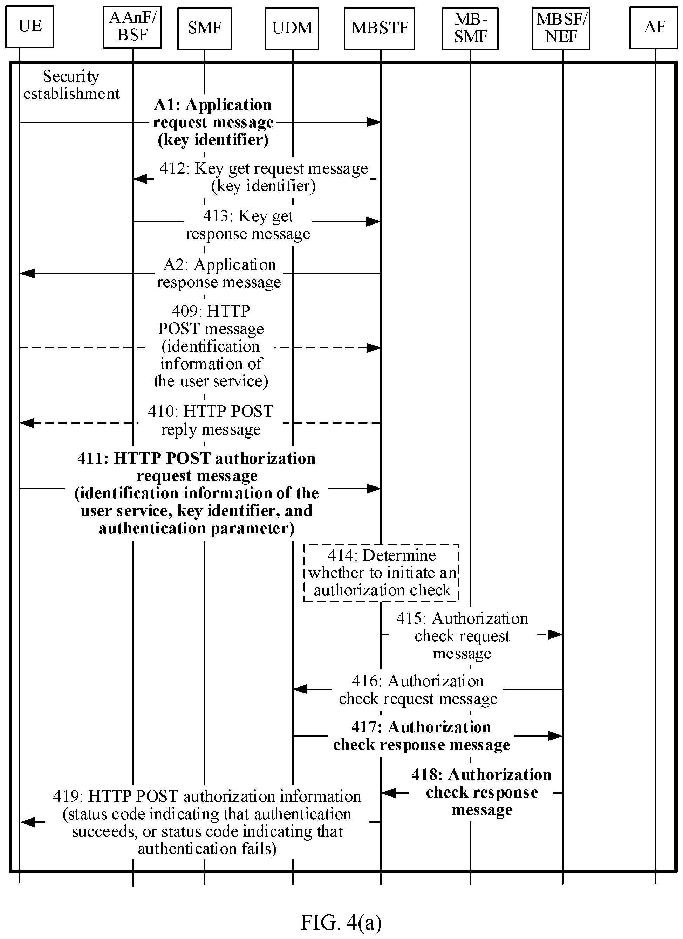

FIG. 4(a) is a diagram of a security establishment procedure;

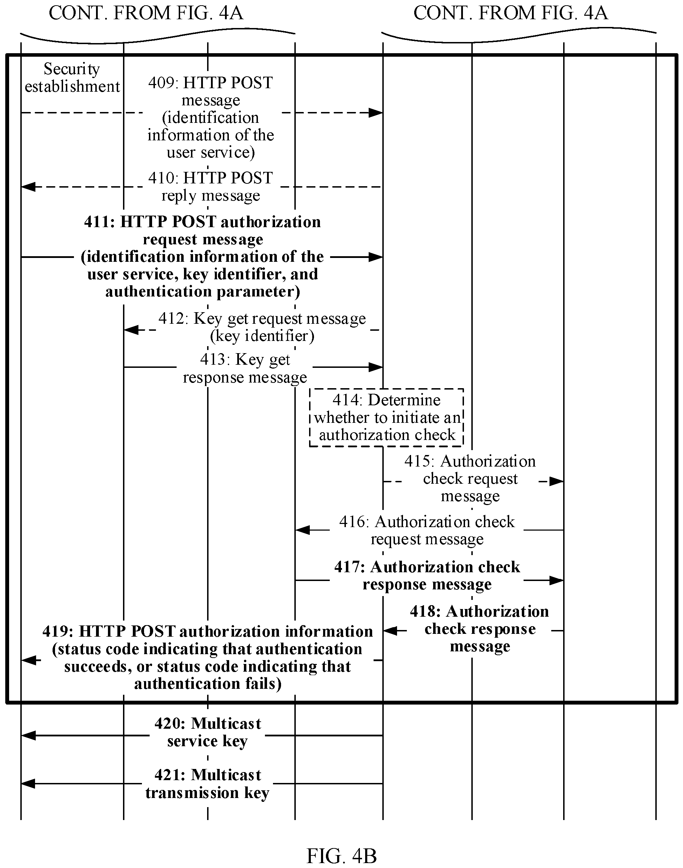

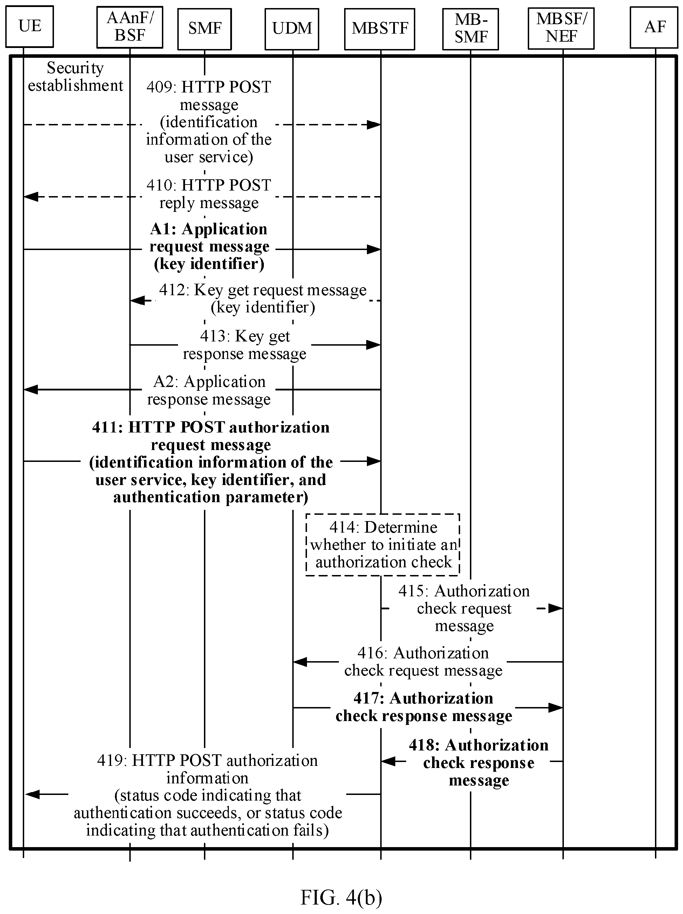

FIG. 4(b) is a diagram of a security establishment procedure;

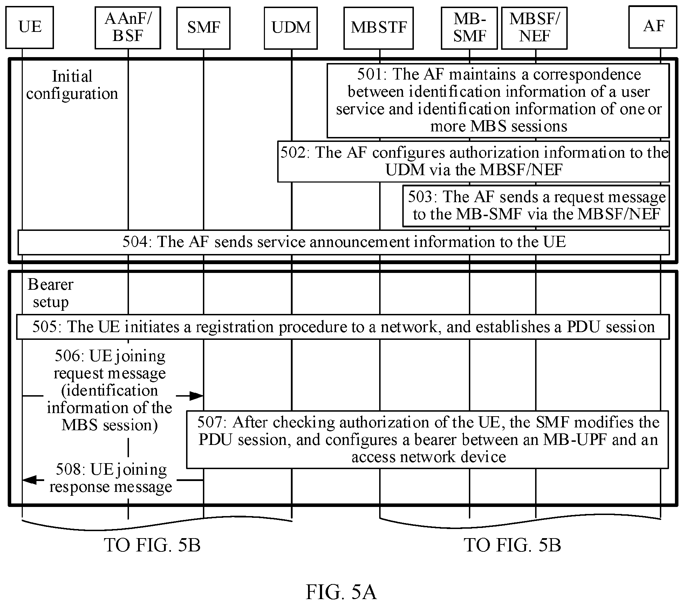

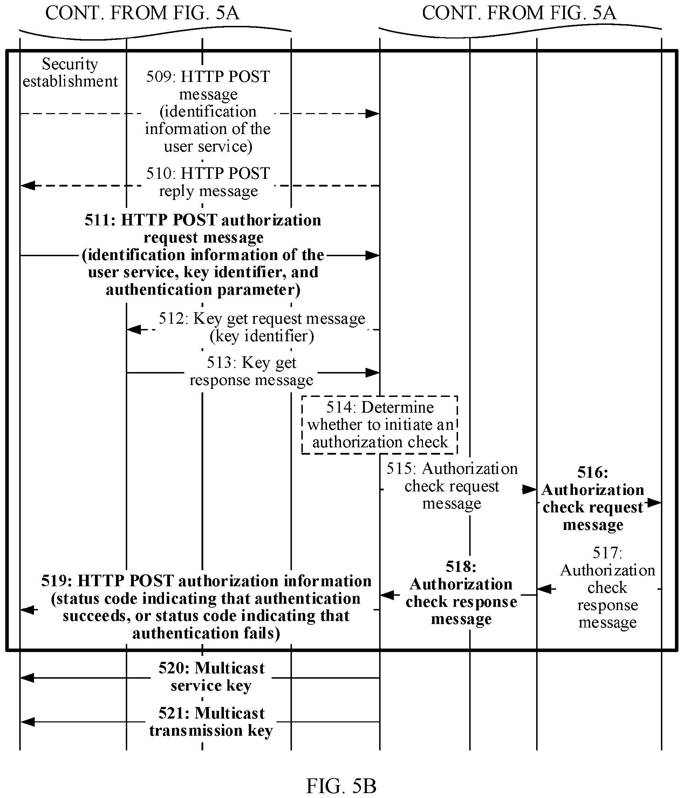

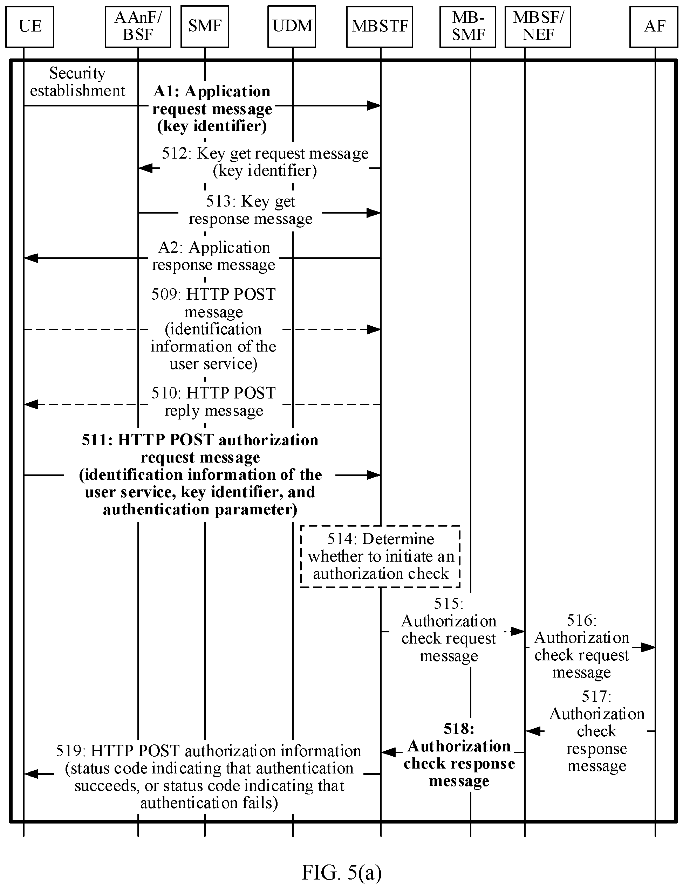

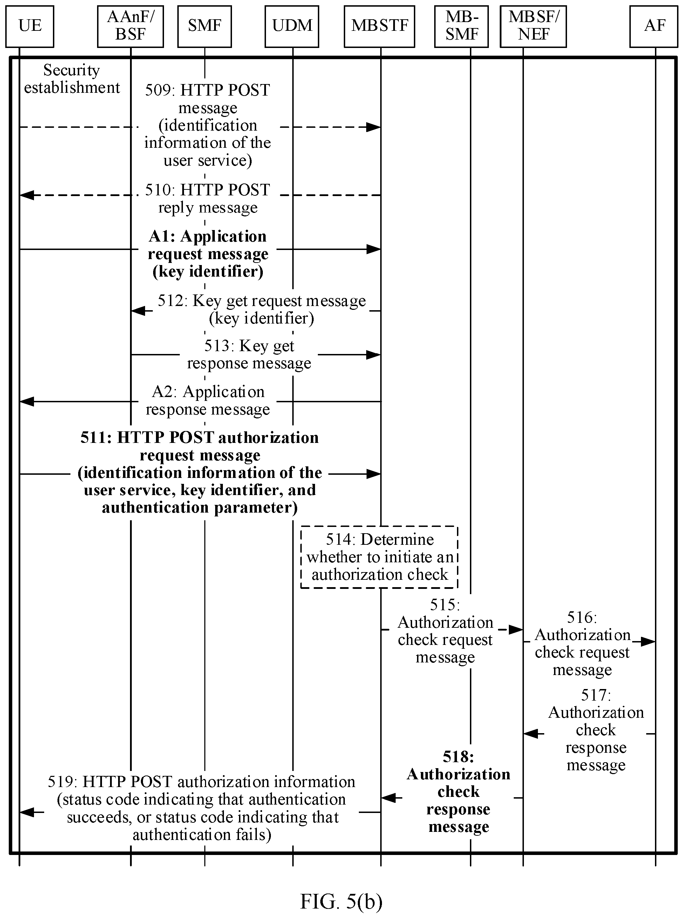

FIG. 5A and FIG. 5B are a schematic flowchart of a method for establishing a multicast service for transmission according to an embodiment of this application;
FIG. 5(a) is a diagram of a security establishment procedure;
FIG. 5(b) is a diagram of a security establishment procedure;

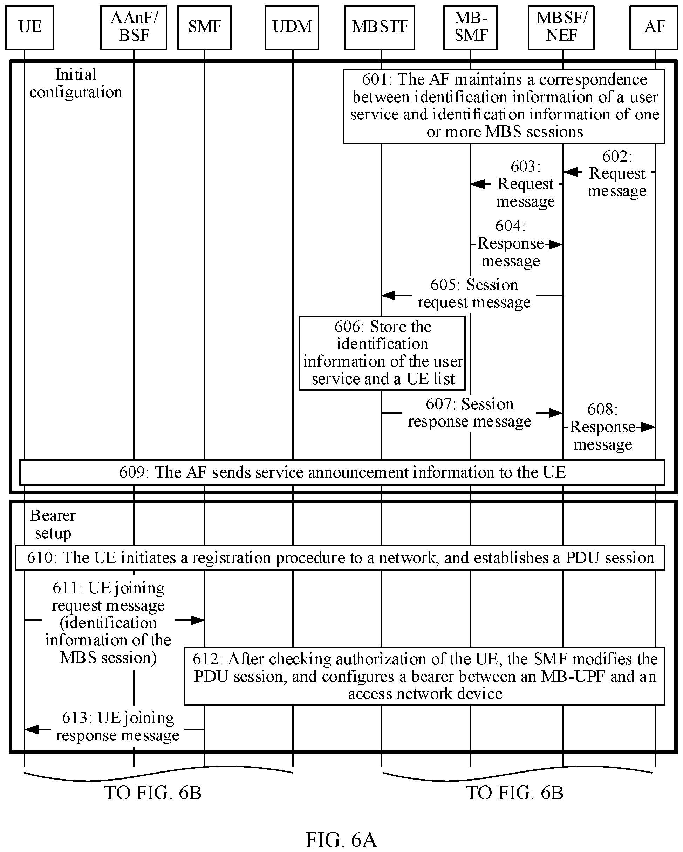

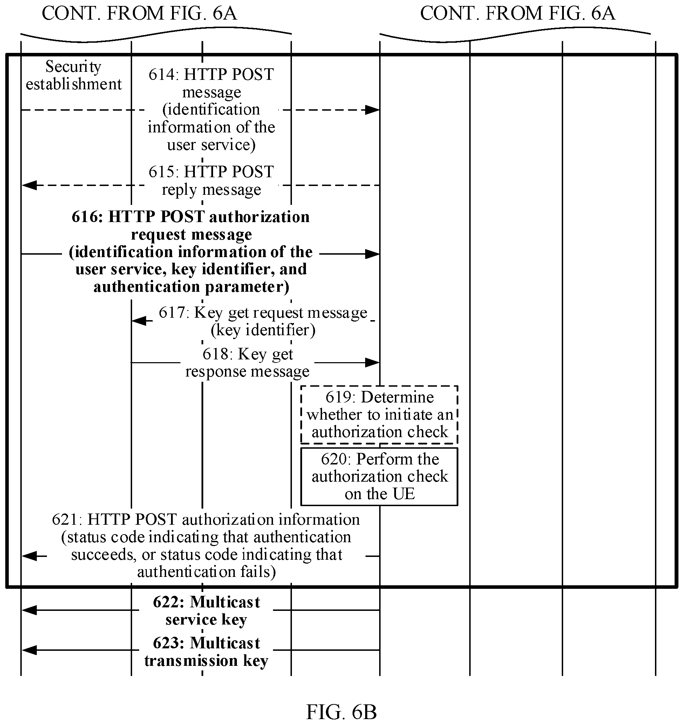

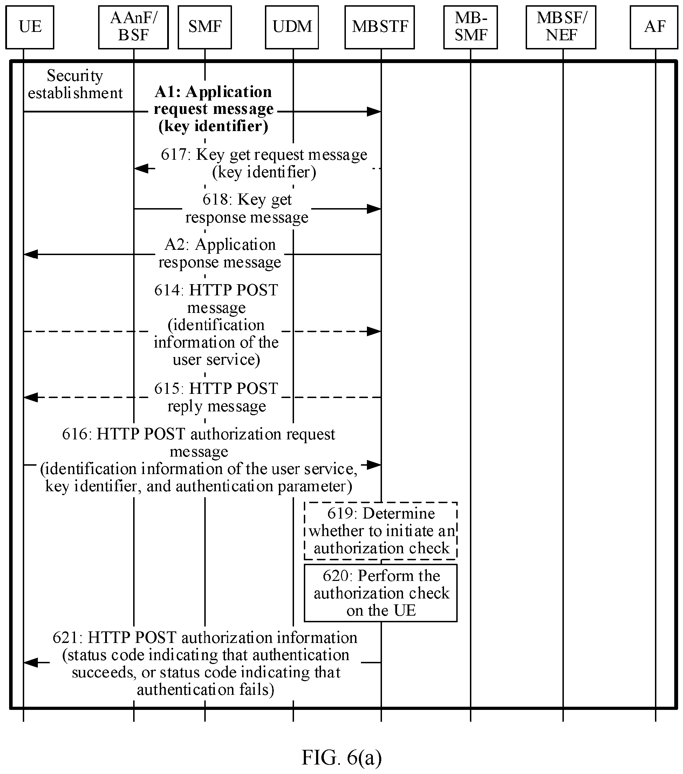

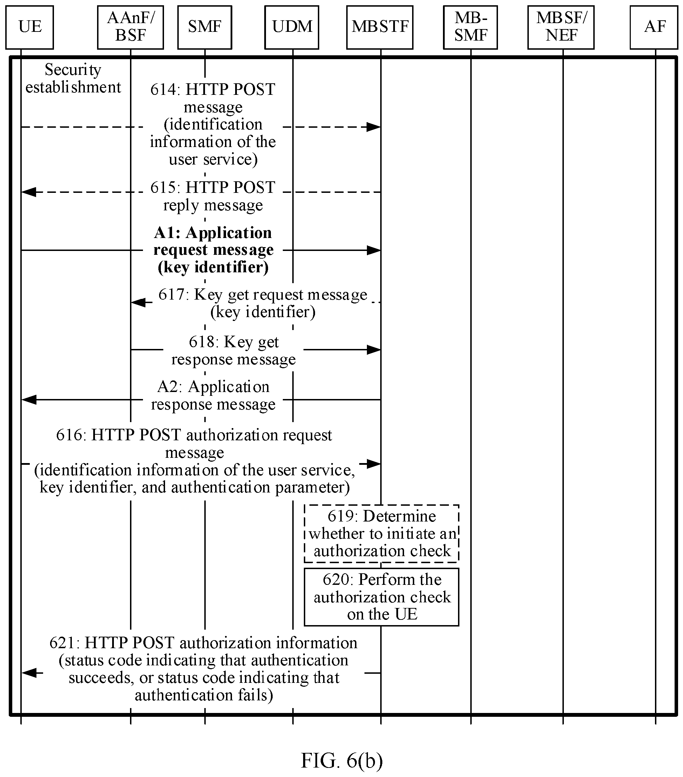

FIG. 6A and FIG. 6B are a schematic flowchart of a method for establishing a multicast service for transmission according to an embodiment of this application;
FIG. 6(a) is a diagram of a security establishment procedure;
FIG. 6(b) is a diagram of a security establishment procedure;

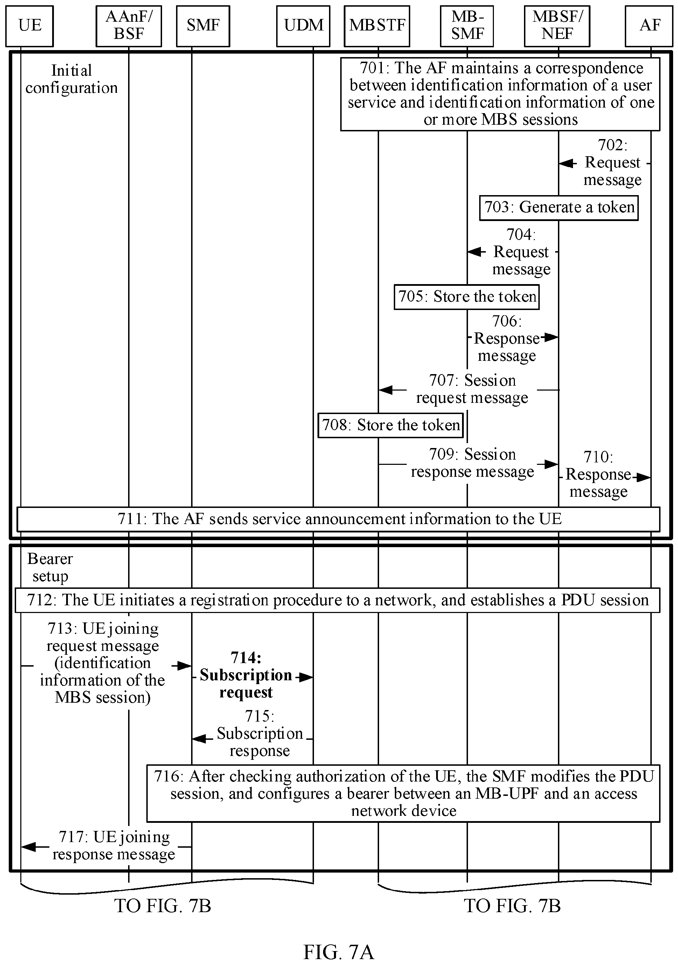

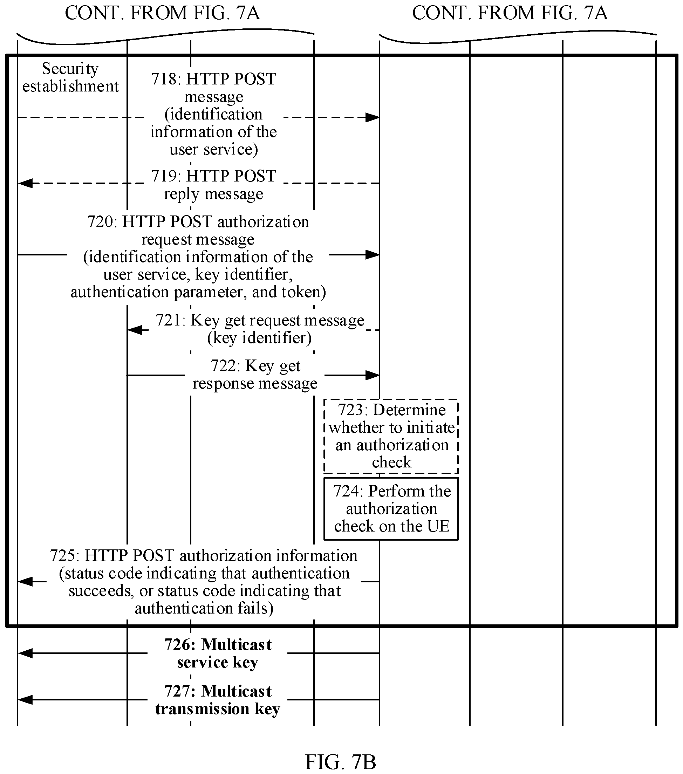

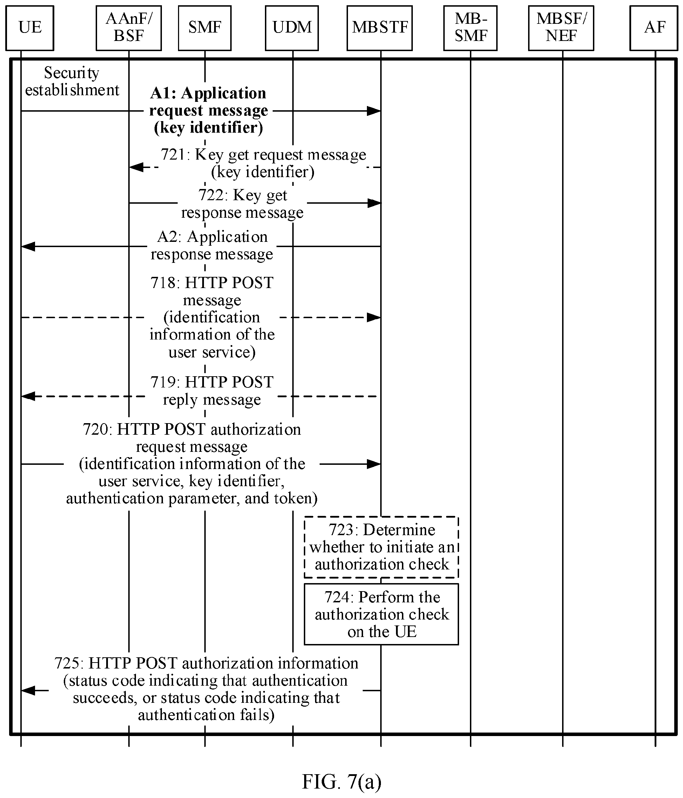

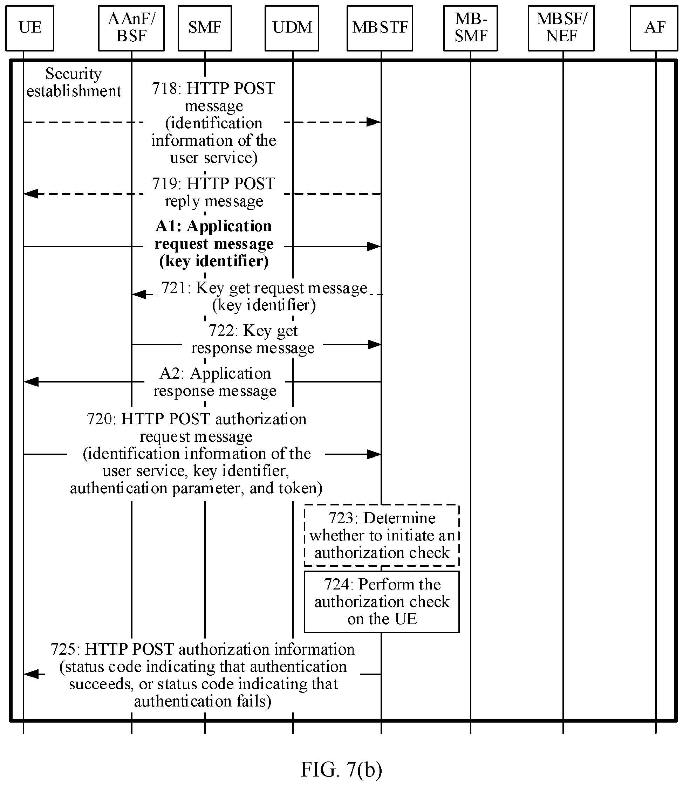

FIG. 7A and FIG. 7B are a schematic flowchart of a method for establishing a multicast service for transmission according to an embodiment of this application;
FIG. 7(a) is a diagram of a security establishment procedure;
FIG. 7(b) is a diagram of a security establishment procedure;

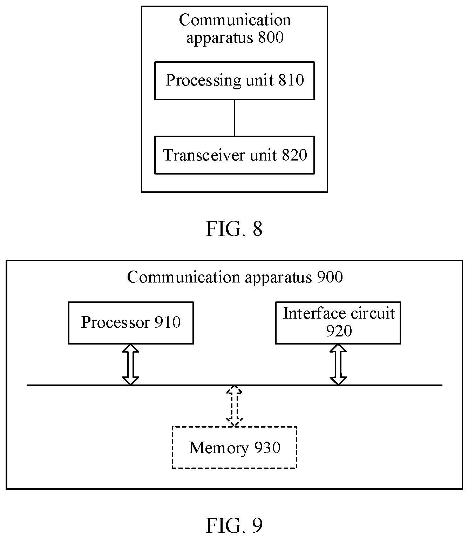

FIG. 8 is a diagram of a communication apparatus according to an embodiment of this application; and
FIG. 9 is a diagram of a communication apparatus according to an embodiment of this application.

### DESCRIPTION OF EMBODIMENTS

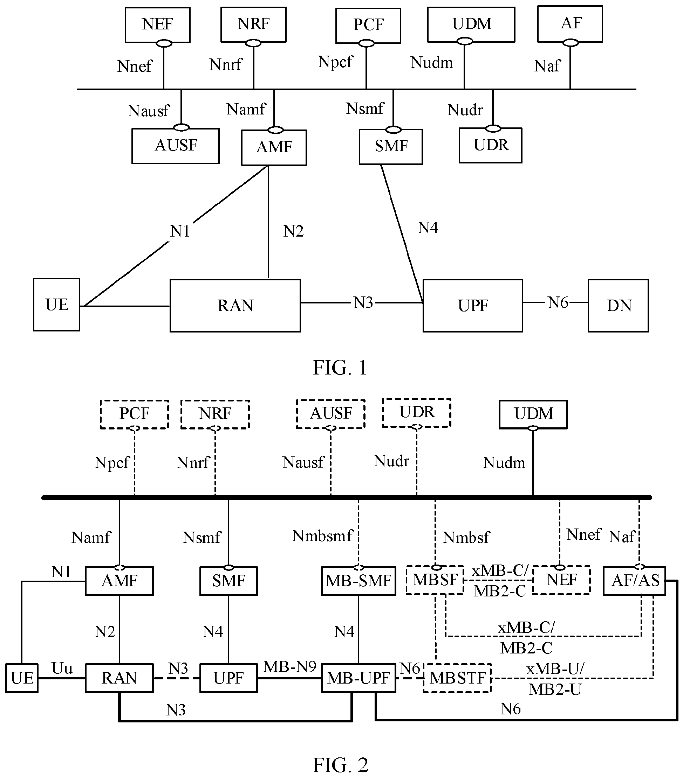

FIG. 1 is a diagram of a 5G network architecture that is based on a service-based architecture. The 5G network architecture shown in FIG. 1 may include a terminal device, an access network, and a core network. The terminal device accesses a data network (data network, DN) through the access network and the core network.

The terminal device may be a user equipment (user equipment, UE), a mobile station, a mobile terminal, or the like. The terminal device may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal device may be a mobile phone, a tablet computer, a computer with a wireless transceiver function, a wearable device, a vehicle, an urban air transportation vehicle (for example, an uncrewed aerial vehicle or a helicopter), a ship, a robot, a robot arm, a smart home device, or the like. The following uses the UE as an example of the terminal device for description. The UE that appears anywhere subsequently may alternatively be replaced with the terminal device or another example of the terminal device.

The access network is used to implement an access-related function, may provide a network access function for an authorized user in a specific area, and can determine transmission links of different quality based on a user level, a service requirement, and the like, to perform transmission of user data. The access network forwards a control signal and the user data between the UE and the core network. The access network may include an access network device. The access network device may be a device that provides access for the UE, and may include a radio access network (radio access network, RAN) device and a wireline access network device. The RAN device is mainly responsible for functions on an air interface side, such as radio resource management, quality of service (quality of service, QoS) management, and data compression and encryption. The RAN device may include base stations in various forms, for example, a macro base station, a micro base station (which may also be referred to as a small cell), a relay station, an access point, and a balloon station. In systems that use different radio access technologies, names of a device that has a base station function may be different. For example, in a 5G system, the device is referred to as a RAN or a next generation NodeB (next-generation node base station, gNB). In a long term evolution (long term evolution, LTE) system, the device is referred to as an evolved NodeB (evolved NodeB, eNB or eNodeB).

The access network device and the UE may be at fixed locations, or may be mobile. The access network device and the UE may be deployed on land, including an indoor device, an outdoor device, a handheld device, or a vehicle-mounted device; may be deployed on a water surface; or may be deployed on an airplane, a balloon, and an artificial satellite in the air. Application scenarios of the access network device and the UE are not limited in embodiments of this application.

The core network is responsible for maintaining subscription data of a mobile network, and providing functions such as session management, mobility management, policy management, and security authentication for the UE. The core network includes but is not limited to one or more of the following network elements: an application function (application function, AF) network element, a unified data management (unified data management, UDM) network element, a unified data repository (unified data repository, UDR) network element, a policy control function (policy control function, PCF) network element, a session management function (session management function, SMF) network element, an access and mobility management function (access and mobility management function, AMF) network element, a network repository function (network repository function, NRF) network element, an authentication server function (authentication server function, AUSF) network element, a network exposure function (network exposure function, NEF) network element, and a user plane function (user plane function, UPF) network element.

The AMF network element is mainly responsible for mobility management in the mobile network, for example, user location update, registration of a user with the network, and a user handover.

The SMF network element is mainly responsible for session management in the mobile network, for example, session establishment, modification, and release. Specific functions include, for example, assigning an internet protocol (internet protocol, IP) address to the user, and selecting a UPF that provides a packet forwarding function.

The UPF network element is mainly responsible for forwarding and receiving the user data, and may receive user data from the data network, and transmit the user data to the UE via the access network device; or may receive user data from the UE via the access network device, and forward the user data to the data network.

The UDM network element includes functions such as subscription data management and user access authorization.

The UDR network element includes functions of storage and retrieval of data of types such as subscription data, policy data, and application data.

The NEF network element is mainly configured to support capability and event exposure.

The AF network element transfers a requirement of an application side on a network side, for example, a QoS requirement or user status event subscription. The AF may be a third-party function entity, or may be an application service deployed by an operator, for example, an IP multimedia subsystem (IP Multimedia Subsystem, IMS) voice call service.

The PCF network element mainly supports providing a unified policy framework to control network behavior, and providing a policy rule for a control layer network function, and is responsible for obtaining user subscription information related to a policy decision. The PCF network element may provide a policy, for example, a QoS policy or a slice selection policy, for the AMF network element and the SMF network element.

The NRF network element may be configured to: provide a network element discovery function, and provide, based on a request of another network element, network element information corresponding to a network element type. The NRF further provides network element management services, for example, network element registration, update, and deregistration, and network element status subscription and push.

The AUSF network element is responsible for authenticating the UE and verifying validity of the UE.

The DN may be deployed with a plurality of services, and may provide a data service, a voice service, and/or another service for the LTE. For example, the DN is a private network of a smart factory, a sensor installed in a workshop of the smart factory may be the UE, a control server of the sensor is deployed in the DN, and the control server may provide a service for the sensor. The sensor may communicate with the control server, to obtain instructions of the control server, and transmit collected sensor data to the control server according to the instructions. For another example, the DN is an internal office network of a company, a mobile phone or a computer of an employee of the company may be the UE, and the mobile phone or the computer of the employee may access information, data resources, and the like on the internal office network of the company.

The AF network element, the UDM network element, the UDR network element, the PCF network element, the SMF network element, the AMF network element, the NRF network element, the AUSF network element, the NEF network element, and the UPF network element may also be respectively referred to as an AF, a UDM, a UDR, a PCF, an SMF, an AMF, an NRF, an AUSF, a NEF and a UPF for short.

In FIG. 1, Nausf, Nnef, Nnfr, Namf, Npcf, Nsmf, Nudm, Nudr and Naf are respectively service-based interfaces exhibited by the foregoing AUSF, NEF, NRF, AMF, PCF, SMF, UDM, UDR and AF, and are used to invoke corresponding service-based operations. N1, N2, N3, N4, and N6 are interface sequence numbers. Meanings of these interface sequence numbers are as follows:
(1) N1 is an interface between the AMF and the UE, and may be used to transfer non-access stratum (non-access stratum, NAS) signaling (for example, including a QoS rule from the AMF) and the like to the UE.
(2) N2 is an interface between the AMF and the access network device, and may be used to transfer radio bearer control information and the like from a core network side to the access network device.
(3) N3 is an interface between the access network device and the UPF, and is mainly used to transfer uplink and downlink user plane data between the access network device and the UPF.
(4) N4 is an interface between the SMF and the UPF, and may be used to transfer information between a control plane and a user plane, including delivery of a forwarding rule, a QoS rule, a traffic statistics rule, and the like from the control plane to the user plane, and reporting of user plane information.
(5) N6 is an interface between the UPF and the DN, and is used to transfer uplink and downlink user data flows between the UPF and the DN.

It may be understood that the foregoing network element or function may be a network element in a hardware device, may be a software function run on dedicated hardware, or may be a virtualized function instantiated on a platform (for example, a cloud platform). In a possible implementation method, the foregoing network element or function may be implemented by one device, may be jointly implemented by a plurality of devices, or may be one functional module in one device. This is not specifically limited in embodiments of this application.

FIG. 2 is a diagram of a multicast/broadcast service architecture that is based on a service-based 5G system. In comparison with the 5G system shown in FIG. 1, one or more of the following network elements are newly added to the multicast/broadcast service architecture shown in FIG. 2: a multicast/broadcast service function (Multicast/Broadcast Service Function, MBSF) network element, an MBSTF network element, a multicast/broadcast SMF (Multicast/Broadcast SMF, MB-SMF) network element, and a multicast/broadcast UPF (Multicast/Broadcast UPF, MB-UPF) network element.

The MBSF network element supports a service layer function of a multicast/broadcast service, interacts with an AF and the MB-SMF to complete a multicast/broadcast service (Multicast/Broadcast Service, MBS) session operation and transmission, controls the MBSTF network element, and the like.

The MBSTF network element is a media anchor of multicast/broadcast service data, and supports processing and distribution of a multicast/broadcast service data flow.

The MB-SMF network element is responsible for multicast/broadcast session management, controlling multicast/broadcast transmission, and performing corresponding configuration on the MB-UPF network element and/or an access network device according to a multicast/broadcast service policy rule provided by a PCF network element or locally configured, to complete transmission of a multicast/broadcast flow.

The MB-UPF network element is responsible for transmitting the multicast/broadcast flow to the access network device or a UPF network element, and may perform packet filtering and distribution on the multicast/broadcast flow, to implement QoS enhancement, counting, reporting, and/or the like of the multicast/broadcast service.

In embodiments of this application, verification (verify) may alternatively be understood as confirm (confirm), determining (judge), a check (check), identification (identify), a check (check), an authorization check (Authorization Check), or the like.

In embodiments of this application, that the verification succeeds may alternatively be understood as that the determining succeeds, the check succeeds, the identification succeeds, the check succeeds, the authorization check succeeds, or the like.

In embodiments of this application, that the verification fails may alternatively be understood as that the determining fails, the check fails, the identification fails, the check fails, the authorization check fails, or the like.

In embodiments of this application, allowing the UE to use may alternatively be understood as that the UE is allowed to use, the UE is authorized to use, the UE has permission to use, allowing the UE to access, the UE is allowed to access, the UE is authorized to access, the UE has permission to access, or the like.

In embodiments of this application, a user service (user service) may also be referred to as an MBS user service (MBS user service), and identification information (user service ID) of the user service is also referred to as identification information (MBS user service ID) of the MBS user service.

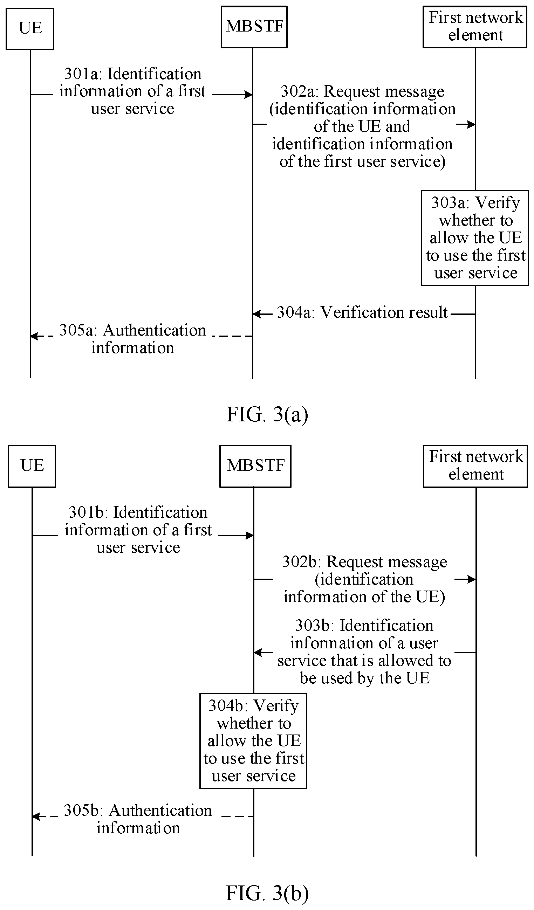

FIG. 3(a) is a schematic flowchart of an authentication method according to an embodiment of this application. The method includes the following steps.

Step 301a: AUE sends identification information (user service ID) of a first user service to an MBSTF.

The first user service is a user service that the UE wants or will use, and the first user service is a multicast service.

For example, the UE may send a request message (for example, an HTTP POST authorization request message) to the MBSTF, where the message includes the identification information of the first user service, and the message is used to request to use the first user service.

Step 302a: The MBSTF sends a request message to a first network element, where the request message includes identification information of the UE and the identification information of the first user service, and the request message is used to request to verify whether to allow the UE to use the first user service.

After receiving the identification information of the first user service from the UE, the MBSTF verifies whether the UE is allowed to use the first user service. Therefore, the MBSTF sends the request message to the first network element, to request to verify whether to allow the UE to use the first user service.

In an implementation method, the MBSTF may obtain the identification information of the UE according to any one of the following methods:
Method 1: In step 301a, the UE further sends the identification information of the UE to the MBSTF.
Method 2: The MBSTF obtains the identification information of the UE from a third-party network element. For example, in step 301a, the UE further sends, to the MBSTF, a key identifier (key identifier, KID) identifying an application key. The MBSTF sends the key identifier to the third-party network element (for example, an AKMA anchor function (AKMA anchor function, AAnF) network element or a binding support function (Binding Support Function, BSF) network element). Then, the third-party network element sends, to the MBSTF, the application key identified by the key identifier, and further sends, to the MBSTF, the identification information of the UE corresponding to the key identifier. AKMA is short for authentication and key management for applications (authentication and key management for applications).

For example, the first network element is a UDM, an AF, or an MBSF. Certainly, the first network element may alternatively be another network element. This is not limited in this embodiment of this application.

In an implementation method, the MBSTF may send the request message to the first network element via an MBSF/NEF.

Step 303a: The first network element verifies, based on the identification information of the first user service and identification information of a user service that is allowed to be used by the UE, whether to allow the UE to use the first user service.

The first network element stores the identification information of the UE and the identification information of the user service that is allowed to be used by the UE. The identification information of the UE and the identification information of the user service that is allowed to be used by the UE that are stored in the first network element may be configured by using a network management system, or may be sent by another network element to the first network element. This is not limited in this embodiment of this application. For example, when the first network element is the UDM, the AF may send, to the UDM for storage, the identification information of the UE and the identification information of the user service that is allowed to be used by the UE. For example, the request message sent by the MBSTF to the first network element includes identification information of a UE 1 and a user service ID 1, and the first network element obtains, based on the identification information of the UE 1, identification information of a user service that is allowed to be used by the UE 1. If the identification information of the user service that is allowed to be used by the UE 1 cannot be obtained, a verification result is generated, and the verification result indicates that the UE 1 is not allowed to use the first user service (that is, a user service corresponding to the user service ID 1). If the identification information of the user service that is allowed to be used by the UE 1 can be obtained, it is further determined whether the identification information of the user service that is allowed to be used by the UE 1 includes the user service ID 1. If the identification information of the user service that is allowed to be used by the UE 1 includes the user service ID 1, a verification result is generated, and the verification result indicates that the UE 1 is allowed to use the first user service (that is, a user service corresponding to the user service ID 1). If the identification information of the user service that is allowed to be used by the UE 1 does not include the user service ID 1, a verification result is generated, and the verification result indicates that the UE 1 is not allowed to use the first user service (that is, a user service corresponding to the user service ID 1).

In an implementation method, step 303a may alternatively be replaced with the following: The first network element verifies, based on the identification information (that is, the identification information of the UE in the request message in the foregoing step 302a) of the UE and identification information of a UE that is allowed to use the first user service, whether to allow the UE to use the first user service. Specifically, the first network element stores the identification information of the first user service and the identification information of the UE that is allowed to use the first user service. The identification information of the first user service and the identification information of the UE that is allowed to use the first user service that are stored in the first network element may be configured by using a network management system, or may be sent by another network element to the first network element. This is not limited in this embodiment of this application. For example, when the first network element is the UDM, the AF may send, to the UDM for storage, the identification information of the first user service and the identification information of the UE that is allowed to use the first user service. For example, the request message sent by the MBSTF to the first network element includes identification information of a UE 1 and a user service ID 1, and the first network element obtains, based on the user service ID 1, identification information of a UE that is allowed to use a user service corresponding to the user service ID 1. If the identification information of the UE that is allowed to use the user service corresponding to the user service ID 1 cannot be obtained, a verification result is generated, and the verification result indicates that the UE 1 is not allowed to use the first user service (that is, the user service corresponding to the user service ID 1). If the identification information of the UE that is allowed to use the user service corresponding to the user service ID 1 can be obtained, it is further determined whether the identification information of the UE that is allowed to use the user service corresponding to the user service ID 1 includes the identification information of the UE 1. If the identification information of the UE that is allowed to use the user service corresponding to the user service ID 1 includes the identification information of the UE 1, a verification result is generated, and the verification result indicates that the UE 1 is allowed to use the first user service (that is, the user service corresponding to the user service ID 1). If the identification information of the UE that is allowed to use the user service corresponding to the user service ID 1 does not include the identification information of the UE 1, a verification result is generated, and the verification result indicates that the UE 1 is not allowed to use the first user service (that is, the user service corresponding to the user service ID 1).

Step 304a: The first network element sends the verification result to the MBSTF.

The verification result indicates that the UE is allowed to use the first user service, or indicates that the UE is not allowed to use the first user service.

Optionally, after step 304a, the following step 305a is further included.

In an implementation method, the first network element may send the verification result to the MBSTF via the MBSF/NEF.

Step 305a: The MBSTF sends authentication (authentication) information to the UE.

If the foregoing verification result indicates that the UE is allowed to use the first user service, the authentication information indicates that authentication succeeds. Optionally, the authentication information is a status code indicating that the authentication succeeds. The authentication information may also be referred to as information indicating that a terminal device is allowed to use the first user service, referred to as information indicating that a secure channel between the MBSTF and the terminal device has been established, referred to as information indicating that an authorization check succeeds, or referred to as an authorization result (authorization result). Unified descriptions are provided herein, and details are not described again in the following embodiments.

If the foregoing verification result indicates that the UE is not allowed to use the first user service, the authentication information indicates that authentication fails. Optionally, the authentication information is a status code indicating that the authentication fails. The authentication information may also be referred to as information indicating that a terminal device is not allowed to use the first user service, referred to as information indicating that a secure channel between the MBSTF and the terminal device is not established, or referred to as information indicating that an authorization check fails. Unified descriptions are provided herein, and details are not described again in the following embodiments.

In an implementation method, if the foregoing step 301a is specifically: The UE sends the request message (for example, the HTTP POST authorization request message) carrying the identification information of the first user service to the MBSTF, step 305a may be: The MBSTF sends a response message (for example, an HTTP POST authorization response message) carrying the authentication information to the UE.

In the foregoing solution, the MBSTF may verify whether to allow the UE to use a user service, so that the MBSTF may determine a data transmission manner between the MBSTF and the UE based on a verification result, to improve security of data transmission. For example, when the verification result is that the UE is allowed to use the first user service, the MBSTF may further send, to the UE, a key (for example, a multicast service key) used to protect data transmission. When the verification result is that the UE is not allowed to use the first user service, the MBSTF does not send, to the UE, a key used to protect data transmission of the first user service. Therefore, a UE that obtains the key can decrypt, based on the key, encrypted data of the first user service from the MBSTF, but a UE that does not obtain the key cannot decrypt the encrypted data of the first user service from the MBSTF, in other words, the encrypted data of the first user service can be obtained, through decryption, only by the UE that is allowed to use the first user service. This improves security of the data transmission.

In an implementation method, before the foregoing step 302a, the MBSTF further performs authentication on an authentication parameter from the LTE. If the authentication parameter does not pass the authentication performed by the MBSTF, the MBSTF does not send the request message to the first network element, that is, does not perform step 302a, and does not perform step 303a and step 304a, but performs step 305a after the authentication parameter does not pass the authentication, and the authentication information in step 305a indicates that the authentication fails. In other words, when the authentication parameter does not pass the authentication performed by the MBSTF, the MBSTF no longer verifies whether to allow the UE to use the first user service, but determines that the authentication fails. If the authentication parameter passes the authentication performed by the MBSTF, the MBSTF sends the request message to the first network element, that is, performs step 302a, and further performs step 303a and step 304a. In addition, if the verification result indicates that the UE is allowed to use the first user service, the authentication information in the foregoing step 305a indicates that the authentication succeeds. If the verification result indicates that the UE is not allowed to use the first user service, the authentication information in the foregoing step 305a indicates that the authentication fails. According to the implementation method, when the MBSTF determines that the authentication parameter passes the authentication, and the verification result indicates that the UE is allowed to use the first user service, the MBSTF sends, to the UE, the authentication information indicating that the authentication succeeds. When the MBSTF determines that the authentication parameter does not pass the authentication, or the MBSTF determines that the authentication parameter passes the authentication but the verification result indicates that the UE is not allowed to use the first user service, the MBSTF sends, to the UE, the authentication information indicating that the authentication fails. In this solution, two-step verification may be performed on the UE, where identity security of the UE is verified, and at the same time, whether the UE is allowed to use the first user service is verified. This helps further improve the security of the data transmission. In an implementation method, for example, that the MBSTF performs the authentication on the authentication parameter from the UE may be: The UE sends the key identifier and the authentication parameter to the MBSTF, where the authentication parameter includes a random number and a first message authentication code (message authentication code, MAC). The MBSTF obtains the application key corresponding to the key identifier. Then, the MBSTF generates a second MAC based on the application key and the random number in the authentication parameter, and determines whether the first MAC is the same as the second MAC. If the first MAC is the same as the second MAC, the authentication parameter passes the authentication. If the first MAC is different from the second MAC, the authentication parameter does not pass the authentication. A method in which the MBSTF performs the authentication on the authentication parameter from the UE is described herein in a unified manner. Details are not described again below.

In another implementation method, before the foregoing step 302a, the MBSTF further determines whether the identification information of the user service that is allowed to be used by the UE is locally stored. If the identification information of the user service that is allowed to be used by the UE is locally stored, the foregoing step 302a to step 304a are not performed. Instead, the MSBTF verifies, based on the identification information of the first user service and the locally stored identification information of the user service that is allowed to be used by the UE, whether to allow the UE to use the first user service. A specific implementation method is similar to the foregoing step 303a. If the identification information of the user service that is allowed to be used by the UE is not locally stored, the foregoing step 302a to step 304a are performed. In this solution, when the MBSTF locally stores the identification information of the user service that is allowed to be used by the UE, the MBSTF may not need to request the first network element to verify whether to allow the UE to use the first user service, to reduce signaling exchange and overheads, and speed up verification.

FIG. 3(b) is a schematic flowchart of an authentication method according to an embodiment of this application. The method includes the following steps.

Step 301b: A UE sends identification information (user service ID) of a first user service to an MBSTF.

The first user service is a user service that the UE wants or will use, and the first user service is a multicast service.

For example, the UE may send a request message (for example, an HTTP POST authorization request message) to the MBSTF, where the message includes the identification information of the first user service, and the message is used to request to use the first user service.

Step 302b: The MBSTF sends a request message to a first network element, where the request message includes identification information of the UE, and the request message is used to request identification information of a user service that is allowed to be used by the UE.

After receiving the identification information of the first user service from the UE, the MBSTF needs to verify whether the UE is allowed to use the first user service. Therefore, the MBSTF sends the request message to the first network element, to request the identification information of the user service that is allowed to be used by the UE.

For example, the first network element is a UDM, an AF, or an MBSF. Certainly, the first network element may alternatively be another network element. This is not limited in this embodiment of this application.

In an implementation method, the MBSTF may send the request message to the first network element via an MBSF/NEF.

Optionally, the request message in step 302b may be a subscription request message, where the subscription request message includes the identification information of the UE, and the subscription request message is used to subscribe to an update notification of the identification information of the service that is allowed to be used by the UE. To be specific, when the identification information of the service that is allowed to be used by the UE is updated, the first network element actively sends, to the MBSTF, updated identification information of the service that is allowed to be used by the UE.

Step 303b: The first network element sends, to the MBSTF, the identification information of the user service that is allowed to be used by the UE.

The first network element stores the identification information of the UE and the identification information of the user service that is allowed to be used by the UE. The identification information of the UE and the identification information of the user service that is allowed to be used by the UE that are stored in the first network element may be configured by using a network management system, or may be sent by another network element to the first network element. This is not limited in this embodiment of this application. For example, when the first network element is the UDM, the AF may send, to the UDM for storage, the identification information of the UE and the identification information that corresponds to the identification information of the UE and that is of the user service that is allowed to be used by the UE.

For example, the request message sent by the MBSTF to the first network element includes identification information of a UE 1, and the first network element obtains, based on the identification information of the UE 1, identification information of a user service that is allowed to be used by the UE 1, and sends, to the MBSTF, the identification information of the user service that is allowed to be used by the UE 1.

If the request message in the foregoing step 302b is the subscription request message, when the first network element checks that the MBSTF has subscription permission, step 303b is performed. Specifically, the first network element sends a subscription response message to the MBSTF, where the subscription response message includes the identification information of the user service that is allowed to be used by the LTE. Subsequently, if the identification information of the user service that is allowed to be used by the UE is updated, the first network element sends a notification message to the MBSTF, where the notification message includes the updated identification information of the user service that is allowed to be used by the UE.

In an implementation method, the first network element may send, to the MBSTF via the MBSF/NEF, the identification information of the user service that is allowed to be used by the UE.

Step 304b: The MBSTF verifies, based on the identification information of the first user service and the identification information of the user service that is allowed to be used by the UE, whether to allow the UE to use the first user service.

For example, the identification information of the first user service is a user service ID 1, and the foregoing UE is specifically the UE 1. The MBSTF receives, from the first network element, the identification information of the user service that is allowed to be used by the UE 1, and then the MBSTF determines whether the identification information of the user service that is allowed to be used by the UE 1 includes the user service ID 1. If the identification information of the user service that is allowed to be used by the UE 1 includes the user service ID 1, the MBSTF determines to allow the UE 1 to use the first user service. If the identification information of the user service that is allowed to be used by the UE 1 does not include the user service ID 1, the MBSTF determines not to allow the UE 1 to use the first user service.

Optionally, after step 304b, the following step 305b is further included.

In an implementation method, the request message in the foregoing step 302b may not carry the identification information of the UE, but carry the identification information of the first user service. Correspondingly, the foregoing step 303b is replaced with the following: The first network element sends, to the MBSTF, identification information of a UE that is allowed to use the first user service. In addition, the foregoing step 304b is replaced with the following: The MBSTF verifies, based on the identification information of the UE in the foregoing step 301b and the identification information of the UE that is allowed to use the first user service, whether to allow the UE to use the first user service. For example, if the MBSTF determines that the identification information of the UE that is allowed to use the first user service includes the identification information of the UE in step 301b, the MBSTF determines to allow the UE to use the first user service. For another example, if the MBSTF determines that the identification information of the UE that is allowed to use the first user service does not include the identification information of the UE in step 301b, the MBSTF determines not to allow the UE to use the first user service.

Step 305b: The MBSTF sends authentication information to the UE.

If the MBSTF determines to allow the UE to use the first user service, the authentication information indicates that authentication succeeds. Optionally, the authentication information is a status code indicating that the authentication succeeds.

If the MBSTF determines not to allow the UE to use the first user service, the authentication information indicates that authentication fails. Optionally, the authentication information is a status code indicating that the authentication fails.

In an implementation method, if the foregoing step 301b is specifically: The UE sends the request message (for example, the HTTP POST authorization request message) carrying the identification information of the first user service to the MBSTF, step 305b may be: The MBSTF sends a response message (for example, an HTTP POST authorization response message) carrying the authentication information to the UE.

In the foregoing solution, the MBSTF may verify whether to allow the UE to use a user service, so that the MBSTF may determine a data transmission manner between the MBSTF and the UE based on a verification result, to improve security of data transmission. For example, when the verification result is that the UE is allowed to use the first user service, the MBSTF may further send, to the UE, a key (for example, a multicast service key) used to protect data transmission. When the verification result is that the UE is not allowed to use the first user service, the MBSTF does not send, to the UE, a key used to protect data transmission of the first user service. Therefore, a UE that obtains the key can decrypt, based on the key, encrypted data of the first user service from the MBSTF, but a UE that does not obtain the key cannot decrypt the encrypted data of the first user service from the MBSTF, in other words, the encrypted data of the first user service can be obtained, through decryption, only by the UE that is allowed to use the first user service. This improves security of the data transmission.

In an implementation method, before the foregoing step 302b, the MBSTF further performs authentication on an authentication parameter from the UE. If the authentication parameter does not pass the authentication performed by the MBSTF, the MBSTF does not send the request message to the first network element, that is, does not perform step 302b, and does not perform step 303b and step 304b, but performs step 305b after the authentication parameter does not pass the authentication, and the authentication information in step 305b indicates that the authentication fails. In other words, when the authentication parameter does not pass the authentication performed by the MBSTF, the MBSTF no longer verifies whether to allow the UE to use the first user service, but determines that the authentication fails. If the authentication parameter passes the authentication performed by the MBSTF, the MBSTF sends the request message to the first network element, that is, performs step 302b, and further performs step 303b and step 304b. In addition, if the MBSTF determines to allow the UE to use the first user service, the authentication information in the foregoing step 305b indicates that the authentication succeeds. If the MBSTF determines not to allow the UE to use the first user service, the authentication information in the foregoing step 305b indicates that the authentication fails. According to the implementation method, when the MBSTF determines that the authentication parameter passes the authentication, and the MBSTF determines to allow the UE to use the first user service, the MBSTF sends, to the UE, the authentication information indicating that the authentication succeeds. When the MBSTF determines that the authentication parameter does not pass the authentication, or the MBSTF determines that the authentication parameter passes the authentication but the MBSTF determines not to allow the UE to use the first user service, the MBSTF sends, to the UE, the authentication information indicating that the authentication fails. In this solution, two-step verification may be performed on the UE, where identity security of the UE is verified, and at the same time, whether the UE is allowed to use the first user service is verified. This helps further improve the security of the data transmission.

In another implementation method, before the foregoing step 302b, the MBSTF further determines whether the identification information of the user service that is allowed to be used by the UE is locally stored. If the identification information of the user service that is allowed to be used by the UE is locally stored, the foregoing step 302b and step 303b may not be performed, but step 304b is performed after step 301b. If the identification information of the user service that is allowed to be used by the UE is not locally stored, the foregoing step 302b to step 304b are performed. In this solution, when the MBSTF locally stores the identification information of the user service that is allowed to be used by the UE, the MBSTF may not need to request, from the first network element, the identification information of the user service that is allowed to be used by the UE, to reduce signaling exchange and overheads, and speed up verification.

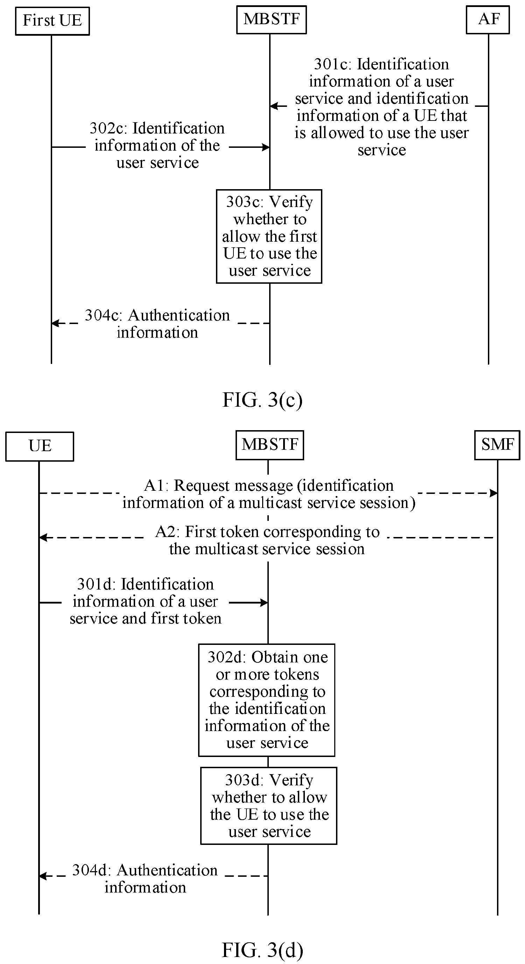

FIG. 3(c) is a schematic flowchart of an authentication method according to an embodiment of this application. The method includes the following steps.

Step 301c: An AF sends, to an MBSTF, identification information of a user service and identification information of a UE that is allowed to use the user service.

The user service is a multicast service.

Example 1: The AF sends the following information to the MBSTF:
a user service ID 1, a UE ID 1, a UE ID 2, and a UE ID 3;
a user service ID 2, the UE ID 2, the UE ID 3, and a UE ID 5; and
a user service ID 3, the UE ID 1, a UE ID 4, and a UE ID 6.

The user service ID 1 to the user service ID 3 are respectively identification information of a user service 1 to a user service 3, and the UE ID 1 to the UE ID 6 are respectively identification information of a UE 1 to a UE 6. UEs that are allowed to use the user service 1 include the UE 1, the UE 2, and the UE 3, UEs that are allowed to use the user service 2 include the UE 2, the UE 3, and the UE 5, and UEs that are allowed to use the user service 3 include the UE 1, the UE 4, and the UE 6.

In an implementation method, step 301c may alternatively be replaced with step 301c': An AF sends, to an MBSTF, identification information of a UE and identification information of a user service that is allowed to be used by the UE. If the method is used, the information sent by the AF in the foregoing example 1 is correspondingly replaced with information sent by the AF in the following example 2.

Example 2: The AF may alternatively send the following information to the MBSTF:
a UE ID 1, a user service ID 1, and a user service ID 3;
a UE ID 2, the user service ID 1, and a user service ID 2;
a UE ID 3, the user service ID 1, and the user service ID 2;
a UE ID 4 and the user service ID 3;
a UE ID 5 and the user service ID 2; and
a UE ID 6 and the user service ID 3.

For example, in specific implementation, in the foregoing step 301c, the AF may send, to the MBSTF through but not limited to any one of the following paths, the identification information of the user service and the identification information of the UE that is allowed to use the user service:
Method 1: AF->MBSF->MB-SMF->MBSF->MBSTF.
Method 2: AF->NEF->MB-SMF->NEF->MBSTF.
Method 3: AF->MBSF->MBSTF.
Method 4: AF->NEF->MBSTF.

Step 302c: A first UE sends the identification information (user service ID) of the user service to the MBSTF.

The user service is a user service that the first UE wants or will use, and the user service is the multicast service.

For example, the first UE may send a request message (for example, an HTTP POST authorization request message) to the MBSTF, where the message includes the identification information of the user service, and the message is used to request to use the user service.

Step 303c: The MBSTF verifies, based on identification information of the first UE and the identification information of the UE that is allowed to use the user service, whether to allow the first UE to use the user service.

For example, if the identification information that is of the user service and that is sent by the first UE to the MBSTF is the user service ID 2, the identification information of the first UE is the UE ID 2, and the information received by the MBSTF from the AF is shown in the example 1 in the foregoing step 301c, UE IDs that correspond to the user service ID 2 and that are locally obtained by the MBSTF include the UE ID 2, the UE ID 3, and the UE ID 5, and then the MBSTF determines whether the UE ID 2, the UE ID 3, and the UE ID 5 include the UE ID 2. Because the UE ID 2, the UE ID 3, and the UE ID 5 include the UE ID 2, the MBSTF determines to allow the UE 2 to use the user service 2.

For another example, if the identification information that is of the user service and that is sent by the first UE to the MBSTF is the user service ID 2, the identification information of the first UE is the UE ID 1, and the information received by the MBSTF from the AF is shown in the example 1 in the foregoing step 301c, UE IDs that correspond to the user service ID 2 and that are locally obtained by the MBSTF include the UE ID 2, the UE ID 3, and the UE ID 5, and then the MBSTF determines whether the UE ID 2, the UE ID 3, and the UE ID 5 include the UE ID 1. Because the UE ID 2, the UE ID 3, and the UE ID 5 do not include the UE ID 1, the MBSTF determines not to allow the UE 1 to use the user service 2.

It should be noted that, if the foregoing step 301c is replaced with the foregoing described step 301c', step 303c is also correspondingly replaced with the following step 303c': The MBSTF verifies, based on identification information of the first UE and identification information of a user service that is allowed to be used by the first UE, whether to allow the first UE to use the user service. Therefore, the MBSTF determines: If the identification information of the user service that is allowed to be used by the first UE includes the identification information of the user service in step 302c, the MBSTF determines to allow the first UE to use the user service corresponding to the identification information of the user service in step 302c. If the identification information of the user service that is allowed to be used by the first UE does not include the identification information of the user service in step 302c, the MBSTF determines not to allow the first UE to use the user service corresponding to the identification information of the user service in step 302c.

Optionally, after step 303c, the following step 304c is further included.

Step 304c: The MBSTF sends authentication information to the first UE.

If the MBSTF determines to allow the first UE to use the user service, the authentication information indicates that authentication succeeds. Optionally, the authentication information is a status code indicating that the authentication succeeds.

If the MBSTF determines not to allow the first UE to use the user service, the authentication information indicates that authentication fails. Optionally, the authentication information is a status code indicating that the authentication fails.

In an implementation method, if the foregoing step 302c is specifically: The first UE sends the request message (for example, the HTTP POST authorization request message) carrying the identification information of the user service to the MBSTF, step 304c may be: The MBSTF sends a response message (for example, an HTTP POST authorization response message) carrying the authentication information to the first UE.

In the foregoing solution, the MBSTF may verify whether to allow the UE to use a user service, so that the MBSTF may determine a data transmission manner between the MBSTF and the UE based on a verification result, to improve security of data transmission. For example, when the verification result is that the UE is allowed to use a first user service, the MBSTF may further send, to the UE, a key (for example, a multicast service key) used to protect data transmission. When the verification result is that the UE is not allowed to use a first user service, the MBSTF does not send, to the UE, a key used to protect data transmission of the first user service. Therefore, a UE that obtains the key can decrypt, based on the key, encrypted data of the first user service from the MBSTF, but a UE that does not obtain the key cannot decrypt the encrypted data of the first user service from the MBSTF, in other words, the encrypted data of the first user service can be obtained, through decryption, only by a UE that is allowed to use the first user service. This improves security of the data transmission.

In an implementation method, before the foregoing step 302c, the MBSTF further performs authentication on an authentication parameter from the first LTE. If the authentication parameter does not pass the authentication performed by the MBSTF, the MBSTF does not perform step 303c, but performs step 304c after the authentication parameter does not pass the authentication, and the authentication information in step 304c indicates that the authentication fails. In other words, when the authentication parameter does not pass the authentication performed by the MBSTF, the MBSTF no longer verifies whether to allow the first UE to use the user service, but determines that the authentication fails. If the authentication parameter passes the authentication performed by the MBSTF, the MBSTF performs step 303c, and further performs step 304c. In addition, if the MBSTF determines to allow the first UE to use the user service, the authentication information in the foregoing step 304c indicates that the authentication succeeds. If the MBSTF determines not to allow the first UE to use the user service, the authentication information in the foregoing step 304c indicates that the authentication fails. According to the implementation method, when the MBSTF determines that the authentication parameter passes the authentication, and the MBSTF determines to allow the first UE to use the user service, the MBSTF sends, to the first UE, the authentication information indicating that the authentication succeeds. When the MBSTF determines that the authentication parameter does not pass the authentication, or the MBSTF determines that the authentication parameter passes the authentication but the MBSTF determines not to allow the first UE to use the user service, the MBSTF sends, to the first UE, the authentication information indicating that the authentication fails. In this solution, two-step verification may be performed on the UE, where identity security of the UE is verified, and at the same time, whether the UE is allowed to use the user service is verified. This helps further improve the security of the data transmission.

FIG. 3(d) is a schematic flowchart of an authentication method according to an embodiment of this application. The method includes the following steps.

Step 301d: A UE sends identification information (user service ID) of a user service and a first token (token) to an MBSTF.

The user service is a user service that the UE wants or will use, and the user service is a multicast service.

For example, the UE may send a request message (for example, an HTTP POST authorization request message) to the MBSTF, where the message includes the identification information of the user service and the first token, and the message is used to request to use the user service.

The UE sends the identification information of the user service and the first token to the MBSTF, to request the MBSTF to verify the first token. When the first token passes the verification, it indicates that the UE is allowed to use the user service.

The first token in the UE may be obtained from another network element. For example, the UE may receive the first token from an SMF in a procedure of establishing a multicast service session. For example, before step 301d, step A1 and step A2 are further performed. Step A1: The UE sends, to the SMF, identification information of the multicast service session corresponding to the identification information of the user service in the foregoing step 301d. For example, the UE sends, to the SMF, a request message used to request to join the multicast service session, where the request message includes the identification information of the multicast service session. Step A2: The SMF sends, to the UE, the first token corresponding to the multicast service session. The first token also corresponds to the identification information of the user service. For example, the SMF sends, to the UE, a session modification command message or a response message for the request message in step A, where the session modification command message or the response message includes the first token.

Step 302d: The MBSTF obtains one or more tokens corresponding to the identification information of the user service.

The MBSTF stores one or more tokens respectively corresponding to identification information of one or more user services. The one or more tokens that respectively correspond to the identification information of the one or more user services and that are stored in the MBSTF may be sent by an AF, a NEF, or an MBSF to the MBSTF, or may be configured by another network element for the MBSTF. This is not limited in this embodiment of this application.

In an implementation, the AF generates the one or more tokens corresponding to the identification information of the user service, and sends, to the MBSTF via the MBSF/NEF, the one or more tokens corresponding to the identification information of the user service.

In another implementation method, the AF sends the identification information of the user service to the MBSF/NEF. The MBSF/NEF generates the one or more tokens corresponding to the identification information of the user service, and then the MBSF/NEF sends, to the MBSTF, the one or more tokens corresponding to the identification information of the user service. Optionally, the MBSF/NEF further sends, to an MB-SMF, the one or more tokens corresponding to the identification information of the user service.

In another implementation method, the AF sends the identification information of the user service to the MB-SMF via the MBSF/NEF. The MB-SMF generates the one or more tokens corresponding to the identification information of the user service, and then the MB-SMF sends, to the MBSTF, the one or more tokens corresponding to the identification information of the user service. For example, the MB-SMF sends, to the MBSTF via the MBSF/NEF, the one or more tokens corresponding to the identification information of the user service.

If identification information of one user service corresponds to one token, it indicates that identification information of a plurality of multicast service sessions corresponding to the identification information of the user service corresponds to the token. For example, a user service ID 1 corresponds to identification information of three multicast service sessions, that is, identification information 1 of a multicast service session, identification information 2 of a multicast service session, and identification information 3 of a multicast service session, and the identification information of the three multicast service sessions corresponds to a token 1. In other words, the user service ID 1 also corresponds to the token 1.

If identification information of one user service corresponds to a plurality of tokens, it indicates that identification information of a plurality of multicast service sessions corresponding to the identification information of the user service respectively corresponds to tokens. For example, a user service ID 1 corresponds to identification information of three multicast service sessions, that is, identification information 1 of a multicast service session, identification information 2 of a multicast service session, and identification information 3 of a multicast service session, and the identification information 1 of the multicast service session corresponds to a token 1, the identification information 2 of the multicast service session corresponds to a token 2, and the identification information 3 of the multicast service session corresponds to a token 3. Therefore, the user service ID 1 corresponds to the token 1, the token 2, and the token 3.

For example, information stored in the MBSTF includes:
the user service ID 1, the token 1, the token 2, and the token 3;
a user service ID 2, a token 4, and a token 5; and
a user service ID 3, a token 6, and a token 7.

The user service ID 1 to the user service ID 3 are respectively identification information of a user service 1 to a user service 3, and the token 1 to the token 7 respectively correspond to identification information of a multicast service session 1 to identification information of a multicast service session 7.

Step 303d: The MBSTF verifies, based on the first token and the one or more tokens corresponding to the identification information of the user service, whether to allow the UE to use the user service.

For example, if the identification information of the user service and the first token that are sent by the UE to the MBSTF are respectively the user service ID 2 and the token 4, and the information stored in the MBSTF is shown in the example in the foregoing step 302d, tokens that correspond to the user service ID 2 and that are locally obtained by the MBSTF include the token 4 and the token 5, and then the MBSTF determines whether the token 4 and the token 5 include the first token (that is, the token 4). Because the token 4 and the token 5 include the token 4, the MBSTF determines to allow the UE to use a user service 2.

For another example, if the identification information of the user service and the first token that are sent by the UE to the MBSTF are respectively the user service ID 2 and the token 1, and the information stored in the MBSTF is shown in the example in the foregoing step 302d, tokens that correspond to the user service ID 2 and that are locally obtained by the MBSTF include the token 4 and the token 5, and then the MBSTF determines whether the token 4 and the token 5 include the first token (that is, the token 1). Because the token 4 and the token 5 do not include the token 1, the MBSTF determines not to allow the UE to use a user service 2.

Optionally, after step 303d, the following step 304d is further included.

Step 304d: The MBSTF sends authentication information to the UE.

If the MBSTF determines to allow the UE to use the user service, the authentication information indicates that authentication succeeds. Optionally, the authentication information is a status code indicating that the authentication succeeds.

If the MBSTF determines not to allow the UE to use the user service, the authentication information indicates that authentication fails. Optionally, the authentication information is a status code indicating that the authentication fails.

In an implementation method, if the foregoing step 301d is specifically: The UE sends the request message (for example, the HTTP POST authorization request message) carrying the identification information of the user service and the first token to the MBSTF, step 304d may be: The MBSTF sends a response message (for example, an HTTP POST authorization response message) carrying the authentication information to the UE.

In the foregoing solution, the MBSTF may verify whether to allow the UE to use a user service, so that the MBSTF may determine a data transmission manner between the MBSTF and the UE based on a verification result, to improve security of data transmission. For example, when the verification result is that the UE is allowed to use a first user service, the MBSTF may further send, to the UE, a key (for example, a multicast service key) used to protect data transmission. When the verification result is that the UE is not allowed to use a first user service, the MBSTF does not send, to the UE, a key used to protect data transmission of the first user service. Therefore, a UE that obtains the key can decrypt, based on the key, encrypted data of the first user service from the MBSTF, but a UE that does not obtain the key cannot decrypt the encrypted data of the first user service from the MBSTF, in other words, the encrypted data of the first user service can be obtained, through decryption, only by a UE that is allowed to use the first user service. This improves security of the data transmission.

The following describes the foregoing embodiments in FIG. 3(a) to FIG. 3(d) with reference to specific embodiments in FIG. 4A and FIG. 4B to FIG. 7A and FIG. 7B. The following embodiment in FIG. 4A and FIG. 4B is a specific example of the embodiments in FIG. 3(a) and FIG. 3(b). The embodiment in FIG. 5A and FIG. 5B is a specific example of the embodiments in FIG. 3(a) and FIG. 3(b). The embodiment in FIG. 6A and FIG. 6B is a specific example of the embodiment in FIG. 3(c). The embodiment in FIG. 7A and FIG. 7B is a specific example of the embodiment in FIG. 3(d).

FIG. 4A and FIG. 4B are a schematic flowchart of a method for establishing a multicast service for transmission according to an embodiment of this application. The method includes the following steps.

Step 401: An AF maintains a correspondence between identification information (user service ID) of a user service and identification information (MBS session ID) of one or more MBS sessions.

The AF initiates the user service (user service), and requests, from an MB-SMF via an MBSF and/or a NEF, the identification information of the one or more MBS sessions corresponding to the user service. The MB-SMF allocates the identification information of the MBS session to the user service based on the request of the AF. The identification information of the MBS session may be a temporary mobile group identifier (Temporary Mobile Group Identifier, TMGI). After receiving the identification information of the one or more MBS sessions from the MB-SMF, the AF establishes the correspondence between the identification information of the user service and the identification information of the one or more MBS sessions. Alternatively, after receiving the identification information of the one or more MBS sessions from the MB-SMF, the MBSF may establish the correspondence between the identification information of the user service and the identification information of the one or more MBS sessions, and then send the correspondence to the AF. The MBSF may also locally maintain the correspondence.

It should be noted that, if the identification information of the MBS session is an IP address, the AF may alternatively allocate the identification information of the one or more MBS sessions to the user service, and then the AF establishes and maintains the correspondence between the identification information of the user service and the identification information of the one or more MBS sessions.

Step 402: The AF initiates a subscription data configuration procedure to a UDM via the MBSF/NEF, and configures authorization information to the UDM.

In a first implementation method, the authorization information is at a granularity of the identification information of the MBS session, and the authorization information includes identification information of a UE and identification information of an MBS session that is allowed to be used by the UE. For example, the authorization information includes an ID of a UE 1, an MBS session ID 1, and an MBS session ID 2. In other words, MBS sessions that can be used by the UE 1 include an MBS session 1 corresponding to the MBS session ID 1 and an MBS session 2 corresponding to the MBS session ID 2.

In a second implementation method, the authorization information is at a granularity of the identification information of the MBS session, and the authorization information includes identification information of a UE, identification information of an MBS session that is allowed to be used by the UE, and a correspondence between the identification information of the MBS session and the identification information of the user service. For example, the authorization information includes an ID of a UE 1, an MBS session ID 1, an MBS session ID 2, and an MBS session ID 3, and further includes a correspondence between the MBS session ID 1 and a user service ID 1, a correspondence between the MBS session ID 2 and the user service ID 1, and a correspondence between the MBS session ID 3 and a user service ID 2. In other words, MBS sessions that can be used by the UE 1 include an MBS session 1 corresponding to the MBS session ID 1, an MBS session 2 corresponding to the MBS session ID 2, and an MBS session 3 corresponding to the MBS session ID 3. Because the MBS session ID 1 and the MBS session ID 2 each have a correspondence with the user service ID 1, and the MBS session ID 3 has a correspondence with the user service ID 2, user services that can be used by the UE 1 include a user service 1 corresponding to the user service ID 1 and a user service 2 corresponding to the user service ID 2.

In a third implementation method, the authorization information is at a granularity of the identification information of the MBS session and at a granularity of the identification information of the user service, and the authorization information includes identification information of a UE, identification information of an MBS session that is allowed to be used by the UE, and identification information of a user service that is allowed to be used by the LTE. For example, the authorization information includes an ID of a UE 1, an MBS session ID 1, and an MBS session ID 2, and further includes a user service ID 1 and a user service ID 2. In other words, MBS sessions that can be used by the UE 1 include an MBS session 1 corresponding to the MBS session ID 1 and an MBS session 2 corresponding to the MBS session ID 2, and user services that can be used by the UE 1 include a user service 1 corresponding to the user service ID 1 and a user service 2 corresponding to the user service ID 2.

In a fourth implementation method, the authorization information is at a granularity of the identification information of the user service, and the authorization information includes identification information of a UE and identification information of a user service that is allowed to be used by the UE. For example, the authorization information includes an ID of a UE 1, and further includes a user service ID 1 and a user service ID 2. In other words, user services that can be used by the UE 1 include a user service 1 corresponding to the user service ID 1 and a user service 2 corresponding to the user service ID 2.

In a fifth implementation method, the authorization information is at a granularity of the identification information of the user service, and the authorization information includes the identification information of the user service and identification information of a UE that is allowed to use the user service. For example, the authorization information includes a user service ID 1, and an ID of a UE 1 and an ID of a UE 2 that correspond to the user service ID 1, and further includes a user service ID 2, and the ID of the UE 1 and an ID of a UE 3 that correspond to the user service ID 2. In other words, UEs that are allowed to use a user service 1 corresponding to the user service ID 1 include the UE 1 and the UE 2, and UEs that are allowed to use a user service 2 corresponding to the user service ID 2 include the UE 1 and the UE 3.

Optionally, with reference to any one of the foregoing five implementation methods, subscription data further includes information indicating whether the UE is allowed to use the multicast service, and the information indicating whether the UE is allowed to use the multicast service may be understood as indicating whether the UE has a capability of the multicast service. If the subscription data includes information indicating that the UE is allowed to use the multicast service, it indicates that the UE has the capability of the multicast service. If the subscription data does not include information indicating that the UE is allowed to use the multicast service, it indicates that the UE has no capability of the multicast service.

The identification information (UE ID) of the UE may be one or more of a generic public subscription identity (Generic Public Subscription Identity, GPSI), a subscription permanent identifier (subscription permanent identifier, SUPI), or an IP multimedia private identity (IP multimedia private identity, IMPI).

For example, in a scenario in which AKMA is used, the identification information of the UE may be the SUPI, the GPSI, or the SUPI+GPSI. In a scenario in which a generic bootstrapping architecture (Generic Bootstrapping Architecture, GBA) is used, the identification information of the UE may be the SUPI, the ΠVVIPI, or the SUPI+IMPI.

In an implementation method, the foregoing authorization information may alternatively not be configured by the AF to the UDM, but configured to the UDM in a pre-configuration manner.

Step 403: The AF sends a request message to the MB-SMF via the MBSF/NEF, where the request message is used to request to create the MBS session and configure an MBS session parameter, and the request message includes the identification information of the one or more MBS sessions.

In an implementation method, step 403 may alternatively be replaced with the following: The MBSF sends a request message to the MB-SMF, where the request message is used to request to create the MBS session and configure an MBS session parameter, and the request message includes the identification information of the one or more MBS sessions.

The identification information of the one or more MBS sessions may correspond to a same user service, or may correspond to a plurality of user services.

After the MB-SMF, an MB-UPF, an MBSTF, and the like complete configuration, the MB-SMF returns, to the AF, an IP address of the MB-UPF and/or an IP address of the MBSTF corresponding to the created MBS session. The MB-UPF may be selected by the MB-SMF, and the MBSTF may be selected by the MBSF.

For details about a procedure for creating the MBS session, refer to section 7.1.1 in TS 23.247.

Step 404: The AF sends service announcement (service announcement) information to the UE.

In an implementation method, step 404 may alternatively be replaced with the following: The MBSF sends service announcement information to the UE.

The service announcement information includes the identification information of the user service and the identification information of the MBS session corresponding to the identification information of the user service. Optionally, the service announcement information further includes one or more of parameters such as a service area of the user service, start time of the user service, the IP address of the MBSTF, and a security service description.

The service announcement information may be sent to the UE by using an SMS message, through broadcasting, or the like. This is not limited herein.

In an implementation method, the UE herein is a UE that subscribes to the user service, and the AF sends, to a UE that subscribes to a user service, service announcement information corresponding to the user service.

Step 405: The UE initiates a registration procedure to a network, and establishes a PDU session.

The established PDU session may be used to establish the MBS session in a subsequent PDU session modification procedure.

Step 406: The UE initiates a multicast session joining procedure, and sends a UE joining request message to an SMF via an AMF, where the message includes the identification information of the MBS session.

The identification information of the MBS session may be the identification information of the MBS session in the service announcement information from the AF.

Step 407: After checking authorization of the UE, the SMF modifies the PDU session, and configures a bearer between the MB-UPF and an access network device.

The checking authorization of the UE herein means checking whether to allow the UE to use the MBS session. Specifically, the SMF may send the identification information of the UE and the identification information of the MBS session to the UDM. The UDM checks whether to allow the UE to use the MBS session, and then the UDM returns a check result to the SMF. Alternatively, the SMF may send the identification information of the UE to the UDM. The UDM returns, to the SMF, the identification information of the MBS session that is allowed to be used by the UE. The SMF determines whether the identification information of the MBS session that is allowed to be used by the UE includes the identification information of the MBS session in the foregoing step 406. If the identification information of the MBS session that is allowed to be used by the UE includes the identification information of the MBS session in the foregoing step 406, the authorization check succeeds. If the identification information of the MBS session that is allowed to be used by the UE does not include the identification information of the MBS session in the foregoing step 406, the authorization check fails.

For a detailed process of the procedure, refer to section 7.2.1.3 in TS 23.247.

Step 408: The SMF sends a UE joining response message to the UE via the AMF.

Step 409: The UE sends an HTTP POST message to the MBSTF, where the message includes the identification information of the user service.

The identification information of the user service may be the identification information of the user service in the service announcement information from the AF.

Step 410: When authentication needs to be performed on the UE, the MBSTF sends an HTTP POST reply message to the UE, where the message includes a status code 401, and the status code 401 indicates that the UE is not authorized and needs to be authenticated.

The foregoing step 409 and step 410 are optional steps.

Step 411: The UE sends an HTTP POST authorization request (HTTP POST Authorization request) message to the MBSTF, where the message includes the identification information of the user service, a key identifier, and an authentication parameter generated based on an application key. For example, in the scenario in which the AKMA is used, the key identifier may be an AKMA key identifier (AKMA Key Identifier, A-KID). In the scenario in which the GBA is used, the key identifier may be a bootstrapping transaction identifier (Bootstrapping Transaction Identifier, B-TID).

For example, if the UE receives the status code 401 in the foregoing step 410, the UE may send the HTTP POST authorization request message to the MBSTF based on the status code 401.

Step 412: If there is no active context associated with the KID in the MBSTF, the MBSTF sends a key get request (key get request) message to an AAnF/BSF, where the message includes the KID.

The KID is the KID in the HTTP POST authorization request message.

In the scenario in which the AKMA is used, the MBSTF sends the key get request message to the AAnF. In the scenario in which the GBA is used, the MBSTF sends the key get request message to the BSF.

Step 413: The AAnF/BSF queries for or generates, based on the KID, an application key (AF key) corresponding to the KID, and sends a key get response (key get response) message to the MBSTF, where the message includes the identification information (UE ID) of the UE and the application key.

In the scenario in which the AKMA is used, the identification information of the UE is the GPSI. In addition, based on the descriptions in the foregoing step 402, in the scenario in which the AKMA is used, the identification information of the UE in the authorization information configured in the UDM may be the SUPI, the GPSI, or the SUPI+GPSI. When the identification information of the UE in the authorization information configured in the UDM is the GPSI or the SUPI+GPSI, subsequently, when the MBSTF requests, by using the identification information (that is, the GPSI) of the UE that is obtained from the AAnF/BSF, the UDM to perform an authorization check, because the UDM can identify the GPSI, the MBSTF, the UDM, or another network element (for example, the MBSF/NEF) does not need to convert the identification information (that is, the GPSI) of the UE, and the UDM may perform an authorization check on whether to allow a UE corresponding to the GSPI to use the user service, to avoid additional overheads caused by the conversion of the identification information of the UE. When the identification information of the UE in the authorization information configured in the UDM is the SUPI, subsequently, when the MBSTF requests, by using the identification information (that is, the GPSI) of the UE that is obtained from the AAnF/BSF, the UDM to perform an authorization check, because the UDM cannot identify the GPSI, the MBSTF, the UDM, or another network element (for example, the MBSF/NEF) needs to convert the GPSI into the SUPI that can be identified by the UDM, and then the UDM performs an authorization check on whether to allow a UE corresponding to the SUPI to use the user service, to ensure correct execution of the authorization check.

In the scenario in which the GBA is used, the identification information of the UE is the IMPI. In addition, based on the descriptions in the foregoing step 402, in the scenario in which the GBA is used, the identification information of the UE in the authorization information configured in the UDM may be the SUPI, the IMPI, or the SUPI+IMPI. When the identification information of the UE in the authorization information configured in the UDM is the IMPI or the SUPI+IMPI, subsequently, when the MBSTF requests, by using the identification information (that is, the IMPI) of the UE that is obtained from the AAnF/BSF, the UDM to perform an authorization check, because the UDM can identify the IMPI, the MBSTF, the UDM, or another network element (for example, the MBSF/NEF) does not need to convert the identification information (that is, the IMPI) of the UE, and the UDM may perform an authorization check on whether to allow a UE corresponding to the IMPI to use the user service, to avoid additional overheads caused by the conversion of the identification information of the UE. When the identification information of the UE in the authorization information configured in the UDM is the SUPI, subsequently, when the MBSTF requests, by using the identification information (that is, the ΠVVIPI) of the UE that is obtained from the AAnF/BSF, the UDM to perform an authorization check, because the UDM cannot identify the IMPI, the MBSTF, the UDM, or another network element (for example, the MBSF/NEF) needs to convert the IMPI into the SUPI that can be identified by the UDM, and then the UDM performs an authorization check on whether to allow a UE corresponding to the SUPI to use the user service, to ensure correct execution of the authorization check.

Step 414: The MBSTF determines whether to initiate the authorization check.

In an implementation method, the MBSTF checks the authentication parameter from the UE based on the obtained application key. If the check succeeds, the MBSTF determines to initiate the authorization check. If the check fails, the MBSTF determines not to initiate the authorization check. In an implementation method, for example, that the MBSTF performs authentication on the authentication parameter may be: The authentication parameter includes a random number and a first MAC, and the MBSTF generates a second MAC based on the application key and the random number in the authentication parameter, and determines whether the first MAC is the same as the second MAC. If the first MAC is the same as the second MAC, the authentication parameter passes the authentication. If the first MAC is different from the second MAC, the authentication parameter does not pass the authentication.

In another implementation method, if the MBSTF receives the identification information of the user service from step 411, the MBSTF determines to initiate the authorization check.

In another implementation method, the MBSTF receives the identification information of the UE from step 413. If the MBSTF does not store the authorization information corresponding to the identification information of the UE, the MBSTF determines to initiate the authorization check to the UDM. If the MBSTF stores the authorization information corresponding to the identification information of the UE, the MBSTF determines not to initiate the authorization check to the UDM.

When it is determined to initiate the authorization check in step 414, the following step 415 to step 418 need to be performed. When it is determined not to initiate the authorization check in step 414, the following step 415 to step 418 do not need to be performed.

It should be noted that step 414 is an optional step. When step 414 is not performed, the MBSTF needs to initiate the authorization check by default, in other words, the following step 415 to step 418 need to be performed.

Step 415: The MBSTF sends an authorization check request (authorization check request) message to the MBSF/NEF.

In an implementation method, the authorization check request message includes the identification information of the UE, or includes the identification information of the UE and a type identifier (also referred to as indication information), where the type identifier indicates to request, from the UDM, the identification information of the user service that is allowed to be used by the UE, or indicates to request, from the UDM, the identification information of the MBS session that is allowed to be used by the UE.

In another implementation method, the authorization check request message includes the identification information of the user service.

In another implementation method, the authorization check request message includes the identification information of the UE and the identification information of the user service.

The identification information of the UE may be one or more of the GPSI, the IMPI, or the SUPI.

Step 416: The MBSF/NEF sends an authorization check request message to the UDM.

In an implementation method, the MB SF/NEF does not process the authorization check request message received from the MBSTF, but only forwards the authorization check request message to the UDM.

In another implementation method, the MBSF/NEF may process the authorization check request message received from the MBSTF, and then send processed authorization check request message to the UDM. For example, the identification information of the UE in the authorization check request message sent by the MBSTF to the MBSF/NEF is the GPSI. The MBSF/NEF determines an SUPI corresponding to the GPSI, replaces the GPSI in the authorization check request message received from the MBSTF with the SUPI, and then sends processed authorization check request message to the UDM. For another example, the identification information of the UE in the authorization check request message sent by the MBSTF to the MBSF/NEF is the IMPI. The MBSF/NEF determines an SUPI corresponding to the IMPI, replaces the IMPI in the authorization check request message received from the MBSTF with the SUPI, and then sends processed authorization check request message to the UDM.

It should be noted that, if there is an interface between the MBSTF and the UDM, the MBTTF may not forward the authorization check request message via the MBSF/NEF, but send the authorization check request message to the UDM through the interface between the MBSTF and the UDM.

Step 417: The UDM sends an authorization check response message to the MBSF/NEF.

Step 418: The MBSF/NEF sends the authorization check response message to the MBSTF.

The following describes the foregoing step 417 and step 418 in different cases.

Case 1: The identification information of the UE or the identification information of the UE and the type identifier are carried in both of the foregoing step 415 and step 416.

For the case 1, if in the foregoing step 402, the authorization information configured in the UDM includes the identification information of the UE and the identification information of the MBS session that is allowed to be used by the UE, the authorization check response message in step 417 and step 418 includes the identification information of the MBS session that is allowed to be used by the UE.

For the case 1, if in the foregoing step 402, the authorization information configured in the UDM includes the identification information of the UE, the identification information of the MBS session that is allowed to be used by the UE, and the correspondence between the identification information of the MBS session and the identification information of the user service, the authorization check response message in step 417 and step 418 includes the identification information of the user service that is allowed to be used by the UE.

For the case 1, if in the foregoing step 402, the authorization information configured in the UDM includes the identification information of the UE, the identification information of the MBS session that is allowed to be used by the UE, and the identification information of the user service that is allowed to be used by the UE, the authorization check response message in step 417 and step 418 includes the identification information of the user service that is allowed to be used by the UE.

For the case 1, if in the foregoing step 402, the authorization information configured in the UDM includes the identification information of the UE and the identification information of the user service that is allowed to be used by the UE, the authorization check response message in step 417 and step 418 includes the identification information of the user service that is allowed to be used by the UE.

Case 2: The identification information of the UE and the identification information of the user service are carried in both of the foregoing step 415 and step 416.

For the case 2, if in the foregoing step 402, the authorization information configured in the UDM includes the identification information of the UE, the identification information of the MBS session that is allowed to be used by the UE, and the correspondence between the identification information of the MBS session and the identification information of the user service, the authorization information configured in the UDM includes the identification information of the UE, the identification information of the MBS session that is allowed to be used by the UE, and the identification information of the user service that is allowed to be used by the UE, or the authorization information configured in the UDM includes the identification information of the UE and the identification information of the user service that is allowed to be used by the UE, the UDM determines whether the authorization information that corresponds to the UE and that is configured in the UDM includes the identification information of the user service. If the authorization information that corresponds to the UE and that is configured in the UDM includes the identification information of the user service, the authorization check response message in step 417 and step 418 includes information indicating that the authorization check succeeds. If the authorization information that corresponds to the UE and that is configured in the UDM does not include the identification information of the user service, the authorization check response message in step 417 and step 418 includes information indicating that the authorization check fails.

For the case 2, if in the foregoing step 402, the authorization information configured in the UDM includes the identification information of the user service and the identification information of the UE that is allowed to use the user service, the UDM determines whether the UDM stores the identification information of the user service and the identification information of the UE that is allowed to use the user service that are carried in step 416. If the identification information of the user service and the identification information of the UE that is allowed to use the user service that are carried in step 416 are not stored, the authorization check response message in step 417 and step 418 includes information indicating that the authorization check fails. If the identification information of the user service and the identification information of the UE that is allowed to use the user service that are carried in step 416 are stored, the UDM further determines whether the identification information that is configured in the UDM and that is of the UE that is allowed to use the user service includes the identification information that is of the UE and that is carried in step 416. If the identification information that is configured in the UDM and that is of the UE that is allowed to use the user service includes the identification information that is of the UE and that is carried in step 416, the authorization check response message in step 417 and step 418 includes information indicating that the authorization check succeeds. If the identification information that is configured in the UDM and that is of the UE that is allowed to use the user service does not include the identification information that is of the UE and that is carried in step 416, the authorization check response message in step 417 and step 418 includes information indicating that the authorization check fails.

Case 3: The identification information of the user service is carried in both of the foregoing step 415 and step 416.

For the case 3, if in the foregoing step 402, the authorization information configured in the UDM includes the identification information of the user service and the identification information of the UE that is allowed to use the user service, there may be one or more pieces of the identification information of the user service herein. If the authorization information configured in the UDM includes the identification information of the user service and the identification information of the UE that is allowed to use the user service that are in step 416, the authorization check response message in step 417 and step 418 includes the identification information of the UE that is allowed to use the user service. For example, the authorization information in the UDM includes the user service ID 1, and the ID of the UE 1 and the ID of the UE 2 that correspond to the user service ID 1, and further includes the user service ID 2, and the ID of the UE 1 and the ID of the UE 3 that correspond to the user service ID 2. If the identification information of the user service in step 416 is the user service ID 1, the authorization check response message in step 417 and step 418 includes the ID of the UE 1 and the ID of the UE 2.

It should be noted that, if there is the interface between the MBSTF and the UDM, the UDM may not forward the authorization check response message via the MBSF/NEF, but send the authorization check response message to the MBSTF through the interface between the MBSTF and the UDM.

In the foregoing step 417 and step 418, the MBSF/NEF serves as a relay node to forward information from the UDM to the MBSTF. In another implementation method, after receiving the information from the UDM, the MBSF/NEF may alternatively perform corresponding processing, and then send a processed result to the MBSTF. For example, when the authorization check response message in step 417 includes the identification information of the user service that is allowed to be used by the UE or the identification information of the UE that is allowed to use the user service, the MBSF/NEF may determine, based on the identification information of the user service that is allowed to be used by the UE or the identification information of the UE that is allowed to use the user service, whether to allow the UE to use the user service. If the UE is allowed to use the user service, the authorization check response message in the foregoing step 418 includes information indicating that the authorization check succeeds. If the UE is not allowed to use the user service, the authorization check response message in the foregoing step 418 includes information indicating that the authorization check fails.

Step 419: The MBSTF sends HTTP POST authorization information (HTTP POST Authorization Info) to the UE.

If in the foregoing step 418, the MBSTF receives the information indicating that the authorization check succeeds, the HTTP POST authorization information includes a status code indicating that the authentication succeeds. Optionally, if the MBSTF checks the authentication parameter from the UE based on the obtained application key in the foregoing step 414, when the MBSTF successfully checks the authentication parameter of the UE in the foregoing step 414, and the MBSTF receives, in step 418, the information indicating that the authorization check succeeds, the HTTP POST authorization information includes the status code indicating that the authentication succeeds.

If in the foregoing step 418, the MBSTF receives the information indicating that the authorization check fails, the HTTP POST authorization information includes a status code indicating that the authentication fails.

If in the foregoing step 418, the MBSTF receives the identification information of the user service that is allowed to be used by the UE, the MBSTF determines whether the identification information of the user service that is allowed to be used by the UE includes the identification information of the user service received in step 411. If the identification information of the user service that is allowed to be used by the UE includes the identification information of the user service received in step 411, the HTTP POST authorization information includes a status code indicating that the authentication succeeds. If the identification information of the user service that is allowed to be used by the UE does not include the identification information of the user service received in step 411, the HTTP POST authorization information includes a status code indicating that the authentication fails. Optionally, if the MBSTF checks the authentication parameter from the UE based on the obtained application key in the foregoing step 414, when the MBSTF successfully checks the authentication parameter of the UE in the foregoing step 414, and the MBSTF determines that the identification information of the user service that is allowed to be used by the UE includes the identification information of the user service received in step 411, the HTTP POST authorization information includes the status code indicating that the authentication succeeds. When the MBSTF successfully checks the authentication parameter of the UE in the foregoing step 414, but the MBSTF determines that the identification information of the user service that is allowed to be used by the UE does not include the identification information of the user service received in step 411, the HTTP POST authorization information includes the status code indicating that the authentication fails. That the MBSTF determines that the identification information of the user service that is allowed to be used by the UE does not include the identification information of the user service received in step 411 means that the MBSTF determines not to allow the UE to use the user service corresponding to the identification information of the user service received in step 411.

If in the foregoing step 418, the MBSTF receives the identification information of the UE that is allowed to use the user service, the MBSTF determines whether the identification information of the UE that is allowed to use the user service includes the identification information of the UE received in step 413. If the identification information of the UE that is allowed to use the user service includes the identification information of the UE received in step 413, the HTTP POST authorization information includes a status code indicating that the authentication succeeds. If the identification information of the UE that is allowed to use the user service does not include the identification information of the UE received in step 413, the HTTP POST authorization information includes a status code indicating that the authentication fails. Optionally, if the MBSTF checks the authentication parameter from the UE based on the obtained application key in the foregoing step 414, when the MBSTF successfully checks the authentication parameter of the UE in the foregoing step 414, and the MBSTF determines that the identification information of the UE that is allowed to use the user service includes the identification information of the UE received in step 413, the HTTP POST authorization information includes the status code indicating that the authentication succeeds. When the MBSTF successfully checks the authentication parameter of the UE in the foregoing step 414, but the MBSTF determines that the identification information of the UE that is allowed to use the user service does not include the identification information of the UE received in step 413, the HTTP POST authorization information includes the status code indicating that the authentication fails. That the MBSTF determines that the identification information of the UE that is allowed to use the user service does not include the identification information of the UE received in step 413 means that the MBSTF determines not to allow the UE to use the user service corresponding to the identification information of the user service received in step 411.

Alternatively, in the foregoing step 418, the MBSTF may receive the identification information of the MBS session that is allowed to be used by the UE. In this case, the MBSTF first determines the identification information (referred to as identification information X of the MBS session below) of the MBS session corresponding to the identification information of the user service received in step 411. Then, the MBSTF determines whether the identification information of the MBS session that is allowed to be used by the UE includes the identification information X of the MBS session. If the identification information of the MBS session that is allowed to be used by the UE includes the identification information X of the MBS session, the HTTP POST authorization information includes a status code indicating that the authentication succeeds. If the identification information of the MBS session that is allowed to be used by the UE does not include the identification information X of the MBS session, the HTTP POST authorization information includes a status code indicating that the authentication fails. Optionally, if the MBSTF checks the authentication parameter from the UE based on the obtained application key in the foregoing step 414, when the MBSTF successfully checks the authentication parameter of the UE in the foregoing step 414, and the MBSTF determines that the identification information of the MBS session that is allowed to be used by the UE includes the identification information X of the MBS session, the HTTP POST authorization information includes the status code indicating that the authentication succeeds. When the MBSTF successfully checks the authentication parameter of the UE in the foregoing step 414, but the MBSTF determines that the identification information of the MBS session that is allowed to be used by the UE does not include the identification information X of the MBS session, the HTTP POST authorization information includes the status code indicating that the authentication fails. That the MBSTF determines that the identification information of the MBS session that is allowed to be used by the UE does not include the identification information X of the MBS session means that the MBSTF determines not to allow the UE to use the identification information X of the MBS session.

Step 420: When the authentication performed on the user service requested by the UE succeeds, the MBSTF sends a multicast service key to the UE, where the multicast service key is protected by the application key (AF Key).

Step 421: The MBSTF sends a multicast transmission key to the UE in a broadcast manner, where the multicast transmission key is protected by the multicast service key.

Subsequently, in a data transmission process, the AF sends service data of the multicast service to the MBSTF. The MBSTF encrypts the service data by using the multicast transmission key, and then sends the encrypted service data to the UE. The UE decrypts the service data based on the multicast transmission key, to obtain the service data of the multicast service.

The foregoing solution provides a method for configuring the authorization information to the UDM and performing, based on the authorization information, the authorization check on the user service requested by the UE, to prevent a UE that does not obtain user service authorization from obtaining a multicast key (for example, the multicast service key or the multicast transmission key) and multicast data. This improves security.

In an implementation method, the security establishment procedure in FIG. 4A and FIG. 4B may alternatively be replaced with a security establishment procedure shown in FIG. 4(a). In comparison with the security establishment procedure in FIG. 4A and FIG. 4B, step A1 and step A2 are added to the security establishment procedure shown in FIG. 4(a), and for an execution sequence of the steps, refer to FIG. 4(a). Step A1: The UE sends, to the MBSTF, an application request message carrying a key identifier. Step A1 triggers the MBSTF to perform step 412. Step A2 is a response to step A1. To be specific, the MBSTF sends an application response message to the UE, where the application response message is used to notify the UE whether the MBSTF successfully obtains an application key corresponding to the key identifier.

In another implementation method, the security establishment procedure in FIG. 4A and FIG. 4B may alternatively be replaced with a security establishment procedure shown in FIG. 4(b). In comparison with the security establishment procedure in FIG. 4A and FIG. 4B, step A1 and step A2 are added to the security establishment procedure shown in FIG. 4(b), and for an execution sequence of the steps, refer to FIG. 4(b). Step A1: The UE sends, to the MBSTF, an application request message carrying a key identifier. Step A1 triggers the MBSTF to perform step 412. Step A2 is a response to step A1. To be specific, the MBSTF sends an application response message to the UE, where the application response message is used to notify the UE whether the MBSTF successfully obtains an application key corresponding to the key identifier.

FIG. 5A and FIG. 5B are a schematic flowchart of a method for establishing a multicast service for transmission according to an embodiment of this application. The method includes the following steps.

Step 501: Same as the foregoing step 401.

Step 502: The AF initiates a subscription data configuration procedure to a UDM via the MBSF/NEF, and configures authorization information to the UDM.

The authorization information is at a granularity of the identification information of the MBS session, and the authorization information includes identification information of a UE and identification information of an MBS session that is allowed to be used by the UE. For example, the authorization information includes an ID of a UE 1, an MBS session ID 1, and an MBS session ID 2. In other words, MBS sessions that can be used by the UE 1 include an MBS session 1 corresponding to the MBS session ID 1 and an MBS session 2 corresponding to the MBS session ID 2.

Optionally, subscription data further includes information indicating whether the UE is allowed to use the multicast service.

The identification information (UE ID) of the UE may be one or more of a GPSI, an SUPI, or an IMPI.

For example, in a scenario in which AKMA is used, the identification information of the UE may be the SUPI, the GPSI, or the SUPI+GPSI. In a GBA scenario, the identification information of the UE may be the SUPI, the ΠVVIPI, or the SUPI+IMPI.

In an alternative implementation method, the foregoing authorization information may alternatively not be configured by the AF to the UDM, but configured to the UDM in a pre-configuration manner.

Step 503 to step 514: Same as the foregoing step 403 to step 414.

The foregoing step 509, step 510, and step 514 are all optional steps.

Step 515: The MBSTF sends an authorization check request (authorization check request) message to the MBSF/NEF.

In an implementation method, the authorization check request message includes the identification information of the UE, or includes the identification information of the UE and a type identifier (also referred to as indication information), where the type identifier indicates to request, from the UDM, the identification information of the user service that is allowed to be used by the UE, or indicates to request, from the UDM, the identification information of the MBS session that is allowed to be used by the UE.

In another implementation method, the authorization check request message includes the identification information of the user service.

In another implementation method, the authorization check request message includes the identification information of the UE and the identification information of the user service.

The identification information of the UE may be one or more of the GPSI, the ΠVVIPI, or the SUPI.

Step 516: The MBSF/NEF sends the authorization check request message to the AF.

The authorization check request message sent by the MBSF/NEF to the AF is the authorization check request message received by the MBSF/NEF from the MBSTF.

It should be noted that, if there is an interface between the MBSTF and the UDM, the MBTTF may not forward the authorization check request message via the MBSF/NEF, but send the authorization check request message to the UDM through the interface between the MBSTF and the UDM.

Step 517: The AF sends an authorization check response message to the MBSF/NEF.

Step 518: The MBSF/NEF sends the authorization check response message to the MBSTF.

The following describes the foregoing step 517 and step 518 in different cases.

Case 1: The identification information of the UE or the identification information of the UE and the type identifier are carried in both of the foregoing step 515 and step 516.

For the case 1, the authorization check response message in step 517 and step 518 includes the identification information of the user service that is allowed to be used by the UE or the identification information of the MBS session that is allowed to be used by the UE.

Case 2: The identification information of the UE and the identification information of the user service are carried in both of the foregoing step 515 and step 516.

For the case 2, the AF determines whether the identification information that is stored in the AF and that is of the user service that is allowed to be used by the UE includes the identification information of the user service in the foregoing step 516. If the identification information that is stored in the AF and that is of the user service that is allowed to be used by the UE includes the identification information of the user service in the foregoing step 516, the authorization check response message in step 517 and step 518 includes information indicating that the authorization check succeeds. If the identification information that is stored in the AF and that is of the user service that is allowed to be used by the UE does not include the identification information of the user service in the foregoing step 516, the authorization check response message in step 517 and step 518 includes information indicating that the authorization check fails.

Case 3: The identification information of the user service is carried in both of the foregoing step 515 and step 516.

For the case 3, the authorization check response message in step 517 and step 518 includes the identification information of the UE that is allowed to use the user service.

It should be noted that, if there is the interface between the MBSTF and the UDM, the UDM may not forward the authorization check response message via the MBSF/NEF, but send the authorization check response message to the MBSTF through the interface between the MBSTF and the UDM.

In the foregoing step 517 and step 518, the MBSF/NEF serves as a relay node to forward information from the AF to the MBSTF. In another implementation method, after receiving the information from the AF, the MBSF/NEF may alternatively perform corresponding processing, and then send a processed result to the MBSTF. For example, when the authorization check response message in step 517 includes the identification information of the user service that is allowed to be used by the UE or the identification information of the UE that is allowed to use the user service, the MBSF/NEF may determine, based on the identification information of the user service that is allowed to be used by the UE or the identification information of the UE that is allowed to use the user service, whether to allow the UE to use the user service. If the UE is allowed to use the user service, the authorization check response message in the foregoing step 518 includes information indicating that the authorization check succeeds. If the UE is not allowed to use the user service, the authorization check response message in the foregoing step 518 includes information indicating that the authorization check fails.

Step 519: The MBSTF sends HTTP POST authorization information (HTTP POST Authorization Info) to the UE.

If in the foregoing step 518, the MBSTF receives the information indicating that the authorization check succeeds, the HTTP POST authorization information includes a status code indicating that the authentication succeeds. Optionally, if the MBSTF checks the authentication parameter from the UE based on the obtained application key in the foregoing step 514, when the MBSTF successfully checks the authentication parameter of the UE in the foregoing step 514, and the MBSTF receives, in step 518, the information indicating that the authorization check succeeds, the HTTP POST authorization information includes the status code indicating that the authentication succeeds.

If in the foregoing step 518, the MBSTF receives the information indicating that the authorization check fails, the HTTP POST authorization information includes a status code indicating that the authentication fails.

If in the foregoing step 518, the MBSTF receives the identification information of the user service that is allowed to be used by the UE, the MBSTF determines whether the identification information of the user service that is allowed to be used by the UE includes the identification information of the user service received in step 511. If the identification information of the user service that is allowed to be used by the UE includes the identification information of the user service received in step 511, the HTTP POST authorization information includes a status code indicating that the authentication succeeds. If the identification information of the user service that is allowed to be used by the UE does not include the identification information of the user service received in step 511, the HTTP POST authorization information includes a status code indicating that the authentication fails. Optionally, if the MBSTF checks the authentication parameter from the UE based on the obtained application key in the foregoing step 514, when the MBSTF successfully checks the authentication parameter of the UE in the foregoing step 514, and the MBSTF determines that the identification information of the user service that is allowed to be used by the UE includes the identification information of the user service received in step 511, the HTTP POST authorization information includes the status code indicating that the authentication succeeds. When the MBSTF successfully checks the authentication parameter of the UE in the foregoing step 514, but the MBSTF determines that the identification information of the user service that is allowed to be used by the UE does not include the identification information of the user service received in step 511, the HTTP POST authorization information includes the status code indicating that the authentication fails. That the MBSTF determines that the identification information of the user service that is allowed to be used by the UE does not include the identification information of the user service received in step 511 means that the MBSTF determines not to allow the UE to use the user service corresponding to the identification information of the user service received in step 511.

If in the foregoing step 518, the MBSTF receives the identification information of the UE that is allowed to use the user service, the MBSTF determines whether the identification information of the UE that is allowed to use the user service includes the identification information of the UE received in step 513. If the identification information of the UE that is allowed to use the user service includes the identification information of the UE received in step 513, the HTTP POST authorization information includes a status code indicating that the authentication succeeds. If the identification information of the UE that is allowed to use the user service does not include the identification information of the UE received in step 513, the HTTP POST authorization information includes a status code indicating that the authentication fails. Optionally, if the MBSTF checks the authentication parameter from the UE based on the obtained application key in the foregoing step 514, when the MBSTF successfully checks the authentication parameter of the UE in the foregoing step 514, and the MBSTF determines that the identification information of the UE that is allowed to use the user service includes the identification information of the UE received in step 513, the HTTP POST authorization information includes the status code indicating that the authentication succeeds. When the MBSTF successfully checks the authentication parameter of the UE in the foregoing step 514, but the MBSTF determines that the identification information of the UE that is allowed to use the user service does not include the identification information of the UE received in step 513, the HTTP POST authorization information includes the status code indicating that the authentication fails. That the MBSTF determines that the identification information of the UE that is allowed to use the user service does not include the identification information of the UE received in step 513 means that the MBSTF determines not to allow the UE to use the user service corresponding to the identification information of the user service received in step 511.

Step 520 and step 521: Same as the foregoing step 420 and step 421.

Subsequently, in a data transmission process, the AF sends service data of the multicast service to the MBSTF. The MBSTF encrypts the service data by using the multicast transmission key, and then sends the encrypted service data to the UE. The UE decrypts the service data based on the multicast transmission key, to obtain the service data of the multicast service.

The foregoing solution provides a method for performing, by the AF based on the authorization information, the authorization check on the user service requested by the UE, to prevent a UE that does not obtain user service authorization from obtaining a multicast key (for example, the multicast service key or the multicast transmission key) and multicast data. This improves security.

In an implementation method, the security establishment procedure in FIG. 5A and FIG. 5B may alternatively be replaced with a security establishment procedure shown in FIG. 5(a). In comparison with the security establishment procedure in FIG. 5A and FIG. 5B, step A1 and step A2 are added to the security establishment procedure shown in FIG. 5(a), and for an execution sequence of the steps, refer to FIG. 5(a). Step A1: The UE sends, to the MBSTF, an application request message carrying a key identifier. Step A1 triggers the MBSTF to perform step 512. Step A2 is a response to step A1. To be specific, the MBSTF sends an application response message to the UE, where the application response message is used to notify the UE whether the MBSTF successfully obtains an application key corresponding to the key identifier.

In another implementation method, the security establishment procedure in FIG. 5A and FIG. 5B may alternatively be replaced with a security establishment procedure shown in FIG. 5(b). In comparison with the security establishment procedure in FIG. 5A and FIG. 5B, step A1 and step A2 are added to the security establishment procedure shown in FIG. 5(b), and for an execution sequence of the steps, refer to FIG. 5(b). Step A1: The UE sends, to the MBSTF, an application request message carrying a key identifier. Step A1 triggers the MBSTF to perform step 512. Step A2 is a response to step A1. To be specific, the MBSTF sends an application response message to the UE, where the application response message is used to notify the UE whether the MBSTF successfully obtains an application key corresponding to the key identifier.

FIG. 6A and FIG. 6B are a schematic flowchart of a method for establishing a multicast service for transmission according to an embodiment of this application. The method includes the following steps.

Step 601: Same as step 401.

Step 602: The AF sends a request message to the MBSF/NEF, where the request message is used to request to create the MBS session and configure an MBS session parameter, the request message includes the identification information of the one or more MBS sessions, the identification information of the user service corresponding to the identification information of the MBS session, and a UE list corresponding to the identification information of the user service, and the UE list includes identification information of a UE that is allowed to use the user service.

The request message may be a Nnef_MBSSession_create_request message.

The identification information of the one or more MBS sessions may correspond to a same user service, or may correspond to a plurality of user services.

The identification information of the user service corresponding to the identification information of the MBS session is identification information of a user service that is allowed to be used by a UE.

The identification information (UE ID) of the UE may be one or more of a GPSI, an SUPI, or an IMPI.

For example, in a scenario in which AKMA is used, the identification information of the UE may be the SUPI, the GPSI, or the SUPI+GPSI. In a scenario in which a GBA is used, the identification information of the UE may be the SUPI, the IMPI, or the SUPI+IMPI.

For example, the request message includes (a user service ID 1, an MBS session ID 1, an MBS session ID 2, and a UE list 1), and includes (a user service ID 2, an MBS session ID 3, an MBS session ID 4, an MBS session ID 5, and a UE list 2). The UE list 1 includes identification information of a UE 1 and identification information of a UE 2. The UE list 2 includes the identification information of the UE 1 and identification information of a UE 3. Therefore, the user service ID 1 corresponds to the MBS session ID 1 and the MBS session ID 2. In addition, the UE list 1 corresponding to the user service ID 1 includes the identification information of the UE 1 and the identification information of the UE 2. Therefore, identification information of a user service that is allowed to be used by the UE 1 and the UE 2 includes the user service ID 1, and identification information of MBS sessions that are allowed to be used by the UE 1 and the UE 2 include the MBS session ID 1 and the MBS session ID 2. Similarly, a similar relationship exists between the user service ID 2, the MBS session ID 3, the MBS session ID 4, the MBS session ID 5, and the UE list 2.

Step 603: The MB SF/NEF sends a request message to the MB-SMF, where the request message is used to request to create the MBS session and configure the MBS session parameter, and the request message includes the identification information of the one or more MBS sessions, the identification information of the user service corresponding to the identification information of the MBS session, and the UE list corresponding to the identification information of the user service.

The request message may be a Nmbsmf_MBSSession_create_request message.

Step 604: The MB-SMF sends a response message to the MBSF/NEF, where the response message includes the identification information of the user service and the UE list.

The response message may be a Nmbsmf_MBSSession_create_response message.

Step 605: The MBSF/NEF sends a session request message to an MBSTF, where the session request message includes the identification information of the one or more MBS sessions, the identification information of the user service corresponding to the identification information of the MBS session, and the UE list corresponding to the identification information of the user service.

Step 606: The MBSTF stores the identification information of the user service and the UE list.

In the foregoing method, the AF configures, for the MBSTF via the MBSF/NEF in a session configuration process, the UE list corresponding to the identification information of the user service. This specifically relates to the foregoing step 602, step 603, step 605, and step 606. Certainly, a specific implementation method for configuring, for the MBSTF, the UE list corresponding to the identification information of the user service is not limited in this embodiment of this application. For example, the AF may alternatively configure, for the MBSTF in another separate procedure, the UE list corresponding to the identification information of the user service.

For example, information stored in the MBSTF is as follows:
the user service ID 1 and the UE list 1, where the UE list 1 includes a UE ID 1, a UE ID 2, and a UE ID 3;
the user service ID 2 and the UE list 2, where the UE list 2 includes the UE ID 2, the UE ID 3, and a UE ID 5; and
a user service ID 3 and a UE list 3, where the UE list 3 includes the UE ID 1, a UE ID 4, and a UE ID 6.

In another implementation method, when storing the identification information of the UE that is allowed to use the user service, the MBSTF may alternatively use the identification information of the UE as a primary key to store the identification information of the UE and the identification information of the user service that is allowed to be used by the UE. For example, the MBSTF may alternatively store the following information:
a UE ID 1, the user service ID 1, and a user service ID 3;
a UE ID 2, the user service ID 1, and the user service ID 2;
a UE ID 3, the user service ID 1, and the user service ID 2;
a UE ID 4 and the user service ID 3;
a UE ID 5 and the user service ID 2; and
a UE ID 6 and the user service ID 3.

In either of the foregoing two storage manners, identification information of a user service that is allowed to be used by each UE may be stored.

In the foregoing step 602 to step 606, the AF provides, for the MBSTF via the MBSF/NEF and the MB-SMF, the identification information of the user service and the identification information (that is, one UE list) of the UE that is allowed to use the user service, so that, in step 606, the MBSTF stores the identification information of the user service and the UE list corresponding to the identification information of the user service. In an alternative implementation method, the identification information of the user service and the UE list corresponding to the identification information of the user service are not carried in the foregoing step 602 to step 605, but the identification information of the UE and the identification information of the user service that is allowed to be used by the UE are carried. There may be one or more pieces of the identification information of the UE herein. In this case, the identification information of the UE and the identification information of the user service that is allowed to be used by the UE are stored in step 606.

Step 607: The MBSTF sends a session response message to the MBSF/NEF.

Step 608: The MBSF/NEF sends a response message to the AF.

The response message may be a Nnef_MBSSession_create_response message.

After the MB-SMF, an MB-UPF, the MBSTF, and the like complete configuration, the MB-SMF returns, to the AF, an IP address of the MB-UPF and/or an IP address of the MBSTF corresponding to the created MBS session. In other words, the IP address of the MB-UPF and/or the IP address of the MBSTF corresponding to the MBS session are/is included in the foregoing step 604 and step 608. The MB-UPF may be selected by the MB-SMF, and the MBSTF may be selected by the MBSF.

Step 609 to step 619: Same as step 404 to step 414.

The foregoing step 614, step 615, and step 619 are all optional steps.

Step 620: The MBSTF performs the authorization check on the UE.

If in the foregoing step 606, the MBSTF stores the identification information of the user service and the UE list corresponding to the identification information of the user service, step 620 may be specifically: The MBSTF determines whether the UE list corresponding to the identification information of the user service in step 616 can be locally obtained. If the UE list corresponding to the identification information of the user service in step 616 can be obtained, the MBSTF further determines whether the UE list includes the identification information of the UE received in step 618. If the UE list includes the identification information of the UE received in step 618, the authorization check succeeds. Otherwise, if the UE list corresponding to the identification information of the user service in step 616 cannot be locally obtained, or the UE list corresponding to the identification information of the user service in step 616 can be locally obtained, but the UE list does not include the identification information of the UE received in step 618, the authorization check fails. For example, the MBSTF stores the user service ID 1 and the UE list 1 corresponding to the user service ID 1, where the UE list 1 includes the identification information of the UE 1 and the identification information of the UE 2; and further stores the user service ID 2 and the UE list 2 corresponding to the user service ID 2, where the UE list 2 includes the identification information of the UE 1 and the identification information of the UE 3. It is assumed that the user service ID 1 is carried in the foregoing step 616, and the MBSTF receives the identification information of the UE 1 from step 618. In this case, a UE list, that is, the UE list 1, corresponding to the user service ID 1 is first locally obtained. Because the UE list 1 includes the identification information of the UE 1, it indicates that the UE 1 is allowed to use a user service corresponding to the user service ID 1, and the authorization check succeeds.

If in the foregoing step 606, the MBSTF stores the identification information of the UE and the identification information of the user service that is allowed to be used by the UE, step 620 may be specifically: The MBSTF determines whether the identification information that corresponds to the identification information of the UE in step 618 and that is of the user service that is allowed to be used by the UE can be locally obtained. If the identification information that corresponds to the identification information of the UE in step 618 and that is of the user service that is allowed to be used by the UE can be obtained, the MBSTF further determines whether the identification information of the user service that is allowed to be used by the UE includes the identification information of the user service received in step 616. If the identification information of the user service that is allowed to be used by the UE includes the identification information of the user service received in step 616, the authorization check succeeds. Otherwise, if the identification information that corresponds to the identification information of the UE in step 618 and that is of the user service that is allowed to be used by the UE cannot be locally obtained, or the identification information that corresponds to the identification information of the UE in step 618 and that is of the user service that is allowed to be used by the UE can be locally obtained, but the identification information of the user service that is allowed to be used by the UE does not include the identification information of the user service received in step 616, the authorization check fails. For example, the MBSTF stores the user service ID 1 and the user service ID 2 that correspond to the identification information of the UE 1, and further stores the user service ID 1 and the user service ID 3 that correspond to the identification information of the UE 2. It is assumed that the user service ID 1 is carried in the foregoing step 616, and the MBSTF receives the identification information of the UE 1 from step 618. In this case, the user service ID 1 and the user service ID 2 that correspond to the identification information of the UE 1 are first locally obtained. Because the user service ID 1 and the user service ID 2 that correspond to the identification information of the UE 1 include the user service ID 1 carried in step 616, it indicates that the UE 1 is allowed to use a user service corresponding to the user service ID 1, and the authorization check succeeds.

Step 621: The MBSTF sends HTTP POST authorization information (HTTP POST Authorization Info) to the UE.

If in the foregoing step 620, the authorization check performed by the MBSTF succeeds, the HTTP POST authorization information includes a status code indicating that the authentication succeeds. Optionally, if the MBSTF checks the authentication parameter from the UE based on the obtained application key in the foregoing step 614, when the MBSTF successfully checks the authentication parameter of the UE in the foregoing step 614, and the authorization check performed by the MBSTF succeeds in step 620, the HTTP POST authorization information includes the status code indicating that the authentication succeeds.

If in the foregoing step 620, the authorization check performed by the MBSTF fails, the HTTP POST authorization information includes a status code indicating that the authentication fails.

Step 622 and step 623: Same as step 420 and step 421.

Subsequently, in a data transmission process, the AF sends service data of the multicast service to the MBSTF. The MBSTF encrypts the service data by using the multicast transmission key, and then sends the encrypted service data to the UE. The UE decrypts the service data based on the multicast transmission key, to obtain the service data of the multicast service.

The foregoing solution provides a method for performing, by the MBSTF, the authorization check on the user service requested by the UE, to prevent a UE that does not obtain user service authorization from obtaining a multicast key (for example, the multicast service key or the multicast transmission key) and multicast data. This improves security.

In an implementation method, the security establishment procedure in FIG. 6A and FIG. 6B may alternatively be replaced with a security establishment procedure shown in FIG. 6(a). In comparison with the security establishment procedure in FIG. 6A and FIG. 6B, step A1 and step A2 are added to the security establishment procedure shown in FIG. 6(a), and for an execution sequence of the steps, refer to FIG. 6(a). Step A1: The UE sends, to the MBSTF, an application request message carrying a key identifier. Step A1 triggers the MBSTF to perform step 617. Step A2 is a response to step A1. To be specific, the MBSTF sends an application response message to the UE, where the application response message is used to notify the UE whether the MBSTF successfully obtains an application key corresponding to the key identifier.

In another implementation method, the security establishment procedure in FIG. 6A and FIG. 6B may alternatively be replaced with a security establishment procedure shown in FIG. 6(b). In comparison with the security establishment procedure in FIG. 6A and FIG. 6B, step A1 and step A2 are added to the security establishment procedure shown in FIG. 6(b), and for an execution sequence of the steps, refer to FIG. 6(b). Step A1: The UE sends, to the MBSTF, an application request message carrying a key identifier. Step A1 triggers the MBSTF to perform step 617. Step A2 is a response to step A1. To be specific, the MBSTF sends an application response message to the UE, where the application response message is used to notify the UE whether the MBSTF successfully obtains an application key corresponding to the key identifier.

FIG. 7A and FIG. 7B are a schematic flowchart of a method for establishing a multicast service for transmission according to an embodiment of this application. The method includes the following steps.

Step 701: Same as step 401.

Step 702: The AF sends a request message to the MBSF/NEF, where the request message is used to request to create the MBS session and configure an MBS session parameter, and the request message includes the identification information of the one or more MBS sessions and the identification information of the user service corresponding to the identification information of the MBS session.

The request message may be a Nnef_MBSSession_create_request message.

The identification information of the one or more MBS sessions may correspond to a same user service, or may correspond to a plurality of user services.

The identification information of the user service corresponding to the identification information of the MBS session is identification information of a user service that is allowed to be used by a UE.

Identification information (UE ID) of the UE may be one or more of a GPSI, an SUPI, or an IMPI.

For example, in a scenario in which AKMA is used, the identification information of the UE may be the SUPI, the GPSI, or the SUPI+GPSI. In a scenario in which a GBA is used, the identification information of the UE may be the SUPI, the IMPI, or the SUPI+IMPI.

Step 703: The MBSF/NEF generates a token (token) corresponding to the identification information of the user service, or generates tokens respectively corresponding to the identification information of the one or more MBS sessions.

The token may be a random number or a parameter of another type. For example, the MBSF/NEF uses a random number generator to generate a character string of a specific length as the token, or the MBSF/NEF performs a hash operation on an input parameter to obtain an output of a specific length as the token, where the input parameter may be one or more of the identification information of the MBS session, the identification information of the user service, or another information element.

The identification information of the one or more MBS sessions herein is the identification information of the MBS session corresponding to the identification information of the user service.

In an implementation method, the MBSF/NEF generates the token corresponding to the identification information of the user service, and the token is also a token corresponding to the identification information of the one or more MBS sessions corresponding to the identification information of the user service. In other words, identification information of one or more MBS sessions corresponding to identification information of a same user service corresponds to a same token.

In another implementation method, the MBSF/NEF generates the tokens respectively corresponding to the identification information of the one or more MBS sessions. In other words, identification information of different MBS sessions corresponding to identification information of a same user service respectively corresponds to different tokens. Step 703 is an optional step. When 703 is not performed, the AF or the MB-SMF may generate a token (token) corresponding to the identification information of the user service, or generate tokens respectively corresponding to the identification information of the one or more MBS sessions.

Step 704: The MB SF/NEF sends a request message to the MB-SMF, where the request message is used to request to create the MBS session and configure the MBS session parameter, and the request message includes the identification information of the one or more MBS sessions, and the identification information of the user service corresponding to the identification information of the one or more MBS sessions, and includes the token corresponding to the identification information of the user service, or the tokens respectively corresponding to the identification information of the one or more MBS sessions.

The request message may be a Nmbsmf_MBSSession_create_request message.

Step 705: The MB-SMF stores the token corresponding to the identification information of the user service, and/or stores the tokens respectively corresponding to the identification information of the one or more MBS sessions.

Step 706: The MB-SMF sends a response message to the MBSF/NEF.

The response message may be a Nmbsmf_MBSSession_create _response message.

Step 707: The MBSF/NEF sends a session request message to an MBSTF, where the session request message includes the identification information of the one or more MBS sessions, and the identification information of the user service corresponding to the identification information of the one or more MBS sessions, and includes the token corresponding to the identification information of the user service, or the tokens respectively corresponding to the identification information of the one or more MBS sessions.

Step 708: The MBSTF stores the token corresponding to the identification information of the user service, and/or stores the tokens respectively corresponding to the identification information of the one or more MBS sessions.

Step 709: The MBSTF sends a session response message to the MBSF/NEF.

Step 710: The MBSF/NEF sends a response message to the AF.

The response message may be a Nnef_MBSSession_create _response message.

After the MB-SMF, an MB-UPF, the MBSTF, and the like complete configuration, the MB-SMF returns, to the AF, an IP address of the MB-UPF and/or an IP address of the MBSTF corresponding to the created MBS session. In other words, the IP address of the MB-UPF and/or the IP address of the MBSTF corresponding to the MBS session are/is included in the foregoing step 706 and step 710. The MB-UPF may be selected by the MB-SMF, and the MBSTF may be selected by the MBSF.

Step 711 to step 713: Same as the foregoing step 404 to step 406.

Step 714: The SMF sends a subscription request to the MB-SMF, where the subscription request includes the identification information of the MBS session.

Step 715: The MB-SMF sends a subscription response to the SMF, where the subscription response includes the identification information of the MBS session and the token corresponding to the identification information of the MBS session.

Step 716: After checking authorization of the UE, the SMF modifies the PDU session, and configures a bearer between the MB-UPF and an access network device.

The checking authorization of the UE herein means checking whether to allow the UE to use the MBS session. Specifically, the SMF may send the identification information of the UE and the identification information of the MBS session to a UDM. The UDM checks whether to allow the UE to use the MBS session, and then the UDM returns a check result to the SMF. Alternatively, the SMF may send the identification information of the UE to a UDM. The UDM returns, to the SMF, identification information of an MBS session that is allowed to be used by the UE. The SMF determines whether the identification information of the MBS session that is allowed to be used by the UE includes the identification information of the MBS session in the foregoing step 406. If the identification information of the MBS session that is allowed to be used by the UE includes the identification information of the MBS session in the foregoing step 406, the authorization check succeeds. If the identification information of the MBS session that is allowed to be used by the UE does not include the identification information of the MBS session in the foregoing step 406, the authorization check fails.

For a detailed process of the procedure, refer to section 7.2.1.3 in TS 23.247.

Step 717: The SMF sends a UE joining response message to the UE via the AMF, where the UE joining response message includes the identification information of the MBS session and the token corresponding to the identification information of the MBS session.

Step 718 and step 719: Same as the foregoing step 409 and step 410.

The foregoing step 718 and step 719 are optional steps.

Step 720: The UE sends an HTTP POST authorization request message to the MBSTF, where the message includes the identification information of the user service, a key identifier (KID), an authentication parameter generated based on an application key, and the token.

Specifically, the UE receives the token corresponding to the identification information of the MBS session in the foregoing step 717, the identification information of the user service in step 720 is the identification information of the user service corresponding to the MBS session, and the token in step 720 is the token corresponding to the identification information of the MBS session.

Step 721 to step 723: Same as the foregoing step 412 to step 414.

Step 724: The MBSTF performs the authorization check on the UE.

In an implementation method, when the MBSTF stores the token corresponding to the identification information of the user service in step 708, after the identification information of the user service is received in step 720, the token (referred to as a token 1 below) corresponding to the identification information of the user service is obtained from the MBSTF. Then, the MBSTF determines whether the token 1 is the same as the token received in step 720. If the token 1 is the same as the token received in step 720, the authorization check succeeds. If the token 1 is different from the token received in step 720, the authorization check fails.

In another implementation method, when the MBSTF stores the tokens respectively corresponding to the identification information of the one or more MBS sessions in step 708, after the identification information of the user service is received in step 720, the identification information of the one or more MBS sessions corresponding to the identification information of the user service is obtained from the MBSTF, and then the tokens respectively corresponding to the identification information of the one or more MBS sessions are obtained. Then, the MBSTF determines whether the tokens respectively corresponding to the identification information of the one or more MBS sessions include the token received in step 720. The authorization check succeeds if the tokens respectively corresponding to the identification information of the one or more MBS sessions include the token received in step 720. The authorization check fails if the tokens respectively corresponding to the identification information of the one or more MBS sessions do not include the token received in step 720.

Step 725: The MBSTF sends HTTP POST authorization information to the UE.

If in the foregoing step 724, the MBSTF determines that the authorization check succeeds, the HTTP POST authorization information includes a status code indicating that the authentication succeeds. Optionally, if the MBSTF checks the authentication parameter from the UE based on the obtained application key in the foregoing step 723, when the MBSTF successfully checks the authentication parameter of the UE in the foregoing step 723, and the authorization check performed by the MBSTF succeeds in step 724, the HTTP POST authorization information includes the status code indicating that the authentication succeeds.

If in the foregoing step 724, the MBSTF determines that the authorization check fails, the HTTP POST authorization information includes a status code indicating that the authentication fails.

Step 726 and step 727: Same as the foregoing step 420 and step 421.

Subsequently, in a data transmission process, the AF sends service data of the multicast service to the MBSTF. The MBSTF encrypts the service data by using the multicast transmission key, and then sends the encrypted service data to the UE. The UE decrypts the service data based on the multicast transmission key, to obtain the service data of the multicast service.

The foregoing solution provides a method for performing, by the MBSTF, the authorization check on the user service requested by the UE, to prevent a UE that does not obtain user service authorization from obtaining a multicast key (for example, the multicast service key or the multicast transmission key) and multicast data. This improves security.

In an implementation method, the security establishment procedure in FIG. 7A and FIG. 7B may alternatively be replaced with a security establishment procedure shown in FIG. 7(a). In comparison with the security establishment procedure in FIG. 7A and FIG. 7B, step A1 and step A2 are added to the security establishment procedure shown in FIG. 7(a), and for an execution sequence of the steps, refer to FIG. 7(a). Step A1: The UE sends, to the MBSTF, an application request message carrying a key identifier. Step A1 triggers the MBSTF to perform step 721. Step A2 is a response to step A1. To be specific, the MBSTF sends an application response message to the UE, where the application response message is used to notify the UE whether the MBSTF successfully obtains an application key corresponding to the key identifier.

In another implementation method, the security establishment procedure in FIG. 7A and FIG. 7B may alternatively be replaced with a security establishment procedure shown in FIG. 7(b). In comparison with the security establishment procedure in FIG. 7A and FIG. 7B, step A1 and step A2 are added to the security establishment procedure shown in FIG. 7(b), and for an execution sequence of the steps, refer to FIG. 7(b). Step A1: The UE sends, to the MBSTF, an application request message carrying a key identifier. Step A1 triggers the MBSTF to perform step 721. Step A2 is a response to step A1. To be specific, the MBSTF sends an application response message to the UE, where the application response message is used to notify the UE whether the MBSTF successfully obtains an application key corresponding to the key identifier.

It may be understood that, to implement functions in the foregoing embodiments, the multicast/broadcast service transport function network element, the unified data management network element, the application function network element, or the terminal device includes corresponding hardware structures and/or software modules for performing the functions. A person skilled in the art should be easily aware that, in combination with examples of units and method steps described in embodiments disclosed in this application, this application can be implemented by hardware or a combination of hardware and computer software. Whether a function is performed by hardware or hardware driven by computer software depends on a particular application scenario and a design constraint condition of the technical solutions.

FIG. 8 and FIG. 9 each are a diagram of a structure of a possible communication apparatus according to an embodiment of this application. The communication apparatuses may be configured to implement functions of the multicast/broadcast service transport function network element, the unified data management network element, the application function network element, or the terminal device in the foregoing method embodiments, and therefore can also implement beneficial effects of the foregoing method embodiments. In embodiments of this application, the communication apparatuses each may be a multicast/broadcast service transport function network element, a unified data management network element, an application function network element, or a terminal device, or may be a module (for example, a chip) used in the multicast/broadcast service transport function network element, a module (for example, a chip) used in the unified data management network element, a module (for example, a chip) used in the application function network element, or a module (for example, a chip) used in the terminal device.

As shown in FIG. 8, the communication apparatus 800 includes a processing unit 810 and a transceiver unit 820. The communication apparatus 800 is configured to implement functions of the multicast/broadcast service transport function network element, the unified data management network element, the application function network element, or the terminal device in the foregoing method embodiments.

When the communication apparatus 800 is configured to implement the functions of the multicast/broadcast service transport function network element in the foregoing method embodiments, the transceiver unit is configured to: receive identification information of a first user service from the terminal device, where the first user service is a multicast service; send a request message to a first network element, where the request message includes identification information of the terminal device and the identification information of the first user service, and the request message is used to request to verify whether to allow the terminal device to use the first user service; and receive a verification result from the first network element, where the verification result indicates that the terminal device is allowed to use the first user service, or indicates that the terminal device is not allowed to use the first user service.

In a possible implementation method, the transceiver unit is specifically configured to: after an authentication parameter from the terminal device passes authentication performed by the processing unit, send the request message to the first network element.

In a possible implementation method, the transceiver unit is further configured to receive a key identifier and the authentication parameter from the terminal device. The processing unit is configured to: obtain an application key corresponding to the key identifier; and perform the authentication on the authentication parameter based on the application key.

In a possible implementation method, the transceiver unit is specifically configured to: when the authentication parameter from the terminal device passes the authentication performed by the processing unit, and the verification result indicates that the terminal device is allowed to use the first user service, send, to the terminal device, information indicating that the terminal device is allowed to use the first user service; or when the authentication parameter from the terminal device passes the authentication performed by the processing unit, and the verification result indicates that the terminal device is not allowed to use the first user service, send, to the terminal device, information indicating that the terminal device is not allowed to use the first user service.

In a possible implementation method, the transceiver unit is specifically configured to: when the verification result indicates that the terminal device is allowed to use the first user service, send, to the terminal device, information indicating that the terminal device is allowed to use the first user service; or when the verification result indicates that the terminal device is not allowed to use the first user service, send, to the terminal device, information indicating that the terminal device is not allowed to use the first user service.

In a possible implementation method, the transceiver unit is specifically configured to: when the processing unit determines that identification information of a user service that is allowed to be used by the terminal device is not stored, send the request message to the first network element.

In a possible implementation method, the transceiver unit is specifically configured to send the request message to the first network element via a network exposure function network element or a multicast/broadcast service function network element.

In a possible implementation method, the first network element is the unified data management network element, the application function network element, or a multicast/broadcast service function network element.

When the communication apparatus 800 is configured to implement the functions of the multicast/broadcast service transport function network element in the foregoing method embodiments, the transceiver unit is configured to: receive identification information of a first user service from the terminal device, where the first user service is a multicast service; send a request message to a first network element, where the request message includes identification information of the terminal device, and the request message is used to request identification information of a user service that is allowed to be used by the terminal device; and receive, from the first network element, the identification information of the user service that is allowed to be used by the terminal device; and the processing unit is configured to verify, based on the identification information of the first user service and the identification information of the user service that is allowed to be used by the terminal device, whether to allow the terminal device to use the first user service.

In a possible implementation method, the processing unit is specifically configured to: if the identification information of the user service that is allowed to be used by the terminal device includes the identification information of the first user service, determine to allow the terminal device to use the first user service; or if the identification information of the user service that is allowed to be used by the terminal device does not include the identification information of the first user service, determine not to allow the terminal device to use the first user service.

In a possible implementation method, the transceiver unit is specifically configured to: after an authentication parameter from the terminal device passes authentication performed by the processing unit, send the request message to the first network element.

In a possible implementation method, the transceiver unit is specifically configured to: when the authentication parameter from the terminal device passes the authentication performed by the processing unit, and a verification result indicates that the terminal device is allowed to use the first user service, send, to the terminal device, information indicating that the terminal device is allowed to use the first user service; or when the authentication parameter from the terminal device passes the authentication performed by the processing unit, and a verification result indicates that the terminal device is not allowed to use the first user service, send, to the terminal device, information indicating that the terminal device is not allowed to use the first user service.

In a possible implementation method, the transceiver unit is specifically configured to: when a verification result indicates that the terminal device is allowed to use the first user service, send, to the terminal device, information indicating that the terminal device is allowed to use the first user service; or when a verification result indicates that the terminal device is not allowed to use the first user service, send, to the terminal device, information indicating that the terminal device is not allowed to use the first user service.

In a possible implementation method, the transceiver unit is specifically configured to: when the processing unit determines that the identification information of the user service that is allowed to be used by the terminal device is not stored, send the request message to the first network element.

In a possible implementation method, the transceiver unit is specifically configured to send the request message to the first network element via a network exposure function network element or a multicast/broadcast service function network element.

In a possible implementation method, the first network element is the unified data management network element, the application function network element, or a multicast/broadcast service function network element.

When the communication apparatus 800 is configured to implement functions of the first network element in the foregoing method embodiments, the transceiver unit is configured to receive a request message from the multicast/broadcast service transport function network element, where the request message includes identification information of the terminal device and identification information of a first user service, and the request message is used to request to verify whether to allow the terminal device to use the first user service; the processing unit is configured to: verify, based on the identification information of the first user service and identification information of a user service that is allowed to be used by the terminal device, whether to allow the terminal device to use the first user service; and the transceiver unit is configured to send a verification result to the multicast/broadcast service transport function network element.

In a possible implementation method, the processing unit is specifically configured to: if the identification information of the user service that is allowed to be used by the terminal device includes the identification information of the first user service, generate the verification result, where the verification result indicates that the terminal device is allowed to use the first user service; or if the identification information of the user service that is allowed to be used by the terminal device does not include the identification information of the first user service, generate the verification result, where the verification result indicates that the terminal device is not allowed to use the first user service.

In a possible implementation method, the transceiver unit is further configured to: before receiving the request message from the multicast/broadcast service transport function network element, receive, from the application function network element, the identification information of the user service that is allowed to be used by the terminal device.

When the communication apparatus 800 is configured to implement the functions of the multicast/broadcast service transport function network element in the foregoing method embodiments, the transceiver unit is configured to: receive, from the application function network element, identification information of a user service and identification information of a terminal device that is allowed to use the user service, where the user service is a multicast service; and receive the identification information of the user service from a first terminal device; and the processing unit is configured to verify, based on identification information of the first terminal device and the identification information of the terminal device that is allowed to use the user service, whether to allow the first terminal device to use the user service.

In a possible implementation method, the processing unit is specifically configured to: if the identification information of the terminal device that is allowed to use the user service includes the identification information of the first terminal device, determine to allow the first terminal device to use the user service; or if the identification information of the terminal device that is allowed to use the user service does not include the identification information of the first terminal device, determine not to allow the first terminal device to use the user service.

In a possible implementation method, the processing unit is specifically configured to: after an authentication parameter from the first terminal device passes authentication, verify, based on the identification information of the first terminal device and the identification information of the terminal device that is allowed to use the user service, whether to allow the first terminal device to use the user service.

In a possible implementation method, the transceiver unit is further configured to: when the authentication parameter from the first terminal device passes the authentication performed by the processing unit, and the first terminal device is determined to be allowed to use the user service, send, to the first terminal device, information indicating that the first terminal device is allowed to use the user service; or when the authentication parameter from the first terminal device passes the authentication performed by the processing unit, and the first terminal device is determined not to be allowed to use the user service, send, to the first terminal device, information indicating that the first terminal device is not allowed to use the user service.

In a possible implementation method, the transceiver unit is further configured to: when the processing unit determines to allow the first terminal device to use the user service, send, to the first terminal device, information indicating that the first terminal device is allowed to use the user service; or when the processing unit determines not to allow the first terminal device to use the user service, send, to the first terminal device, information indicating that the first terminal device is not allowed to use the user service.

When the communication apparatus 800 is configured to implement the functions of the multicast/broadcast service transport function network element in the foregoing method embodiments, the transceiver unit is configured to: receive identification information of a user service and a first token from the terminal device, where the user service is a multicast service; and obtain one or more tokens corresponding to the identification information of the user service; and the processing unit is configured to verify, based on the first token and the one or more tokens, whether to allow the terminal device to use the user service.

In a possible implementation method, the processing unit is specifically configured to: if the one or more tokens include the first token, determine to allow the terminal device to use the user service; or if the one or more tokens do not include the first token, determine not to allow the terminal device to use the user service.

In a possible implementation method, the transceiver unit is further configured to: before receiving the identification information of the user service and the first token from the terminal device, receive, from the application function network element, a network exposure function network element, or a multicast/broadcast service function network element, the identification information of the user service and the one or more tokens corresponding to the identification information of the user service.

When the communication apparatus 800 is configured to implement the functions of the terminal device in the foregoing method embodiments, the transceiver unit is configured to: send identification information of a multicast service session to a session management network element; receive, from the session management network element, a first token corresponding to the multicast service session; and send, to the multicast/broadcast service transport function network element, the first token and identification information of a user service corresponding to the multicast service session, where the user service is a multicast service, and the first token is used to verify whether to allow the terminal device to use the user service. In a possible implementation method, the transceiver unit is specifically configured to send a request message to the session management network element, where the request message includes the identification information of the multicast service session, and the request message is used to request to join the multicast service session.

In a possible implementation method, the transceiver unit is specifically configured to receive a response message of the request message from the session management network element, where the response message includes the first token.

In a possible implementation method, the transceiver unit is specifically configured to receive a session modification command message from the session management network element, where the session modification command message includes the first token.

For more detailed descriptions of the processing unit 810 and the transceiver unit 820, directly refer to related descriptions of the foregoing method embodiments. Details are not described herein.

As shown in FIG. 9, the communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to: store instructions executed by the processor 910, store input data needed by the processor 910 to run instructions, or store data generated by running instructions by the processor 910.

When the communication apparatus 900 is configured to implement the foregoing method embodiments, the processor 910 is configured to implement a function of the processing unit 810, and the interface circuit 920 is configured to implement a function of the transceiver unit 820.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented by hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a base station or a terminal. Certainly, the processor and the storage medium may alternatively exist in the base station or the terminal as discrete components.

All or some of the foregoing embodiments may be implemented by software, hardware, firmware, or any combination thereof. When the software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are performed. The computer may be a general-purpose computer, a dedicated computer, a computer network, a base station, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or logically conflicted, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" usually indicates an "or" relationship between the associated objects. In the formula of this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

## Claims

1. A verification method, comprising:
receiving identification information of a first user service from a terminal device, wherein the first user service is a multicast service;
sending a request message to a first network element, wherein the request message comprises identification information of the terminal device and the identification information of the first user service, and the request message is used to request to verify whether to allow the terminal device to use the first user service; and
receiving a verification result from the first network element, wherein the verification result indicates that the terminal device is allowed to use the first user service, or indicates that the terminal device is not allowed to use the first user service.

2. The method according to claim 1, wherein the sending a request message to a first network element comprises:
after an authentication parameter from the terminal device passes authentication, sending the request message to the first network element.

3. The method according to claim 2, wherein the method further comprises:
when the authentication parameter from the terminal device passes the authentication, and the verification result indicates that the terminal device is allowed to use the first user service, sending, to the terminal device, information indicating that the terminal device is allowed to use the first user service; or
when the authentication parameter from the terminal device passes the authentication, and the verification result indicates that the terminal device is not allowed to use the first user service, sending, to the terminal device, information indicating that the terminal device is not allowed to use the first user service.

4. The method according to claim 1, wherein the method further comprises:
when the verification result indicates that the terminal device is allowed to use the first user service, sending, to the terminal device, information indicating that the terminal device is allowed to use the first user service; or
when the verification result indicates that the terminal device is not allowed to use the first user service, sending, to the terminal device, information indicating that the terminal device is not allowed to use the first user service.

5. The method according to claim 1 or 4, wherein the sending a request message to a first network element comprises:
when determining that identification information of a user service that is allowed to be used by the terminal device is not stored, sending the request message to the first network element.

6. The method according to any one of claims 1 to 5, wherein the sending a request message to a first network element comprises:
sending the request message to the first network element via a network exposure function network element or a multicast/broadcast service function network element.

7. The method according to any one of claims 1 to 6, wherein the first network element is a unified data management network element, an application function network element, or a multicast/broadcast service function network element.

8. A verification method, comprising:
receiving identification information of a first user service from a terminal device, wherein the first user service is a multicast service;
sending a request message to a first network element, wherein the request message comprises identification information of the terminal device, and the request message is used to request identification information of a user service that is allowed to be used by the terminal device;
receiving, from the first network element, the identification information of the user service that is allowed to be used by the terminal device; and
verifying, based on the identification information of the first user service and the identification information of the user service that is allowed to be used by the terminal device, whether to allow the terminal device to use the first user service.

9. The method according to claim 8, wherein the verifying, based on the identification information of the first user service and the identification information of the user service that is allowed to be used by the terminal device, whether to allow the terminal device to use the first user service comprises:
if the identification information of the user service that is allowed to be used by the terminal device comprises the identification information of the first user service, determining to allow the terminal device to use the first user service; or
if the identification information of the user service that is allowed to be used by the terminal device does not comprise the identification information of the first user service, determining not to allow the terminal device to use the first user service.

10. The method according to claim 8 or 9, wherein the sending a request message to a first network element comprises:
after an authentication parameter from the terminal device passes authentication, sending the request message to the first network element.

11. The method according to claim 10, wherein the method further comprises:
when the authentication parameter from the terminal device passes the authentication, and a verification result indicates that the terminal device is allowed to use the first user service, sending, to the terminal device, information indicating that the terminal device is allowed to use the first user service; or
when the authentication parameter from the terminal device passes the authentication, and a verification result indicates that the terminal device is not allowed to use the first user service, sending, to the terminal device, information indicating that the terminal device is not allowed to use the first user service.

12. The method according to claim 8 or 9, wherein the method further comprises:
when a verification result indicates that the terminal device is allowed to use the first user service, sending, to the terminal device, information indicating that the terminal device is allowed to use the first user service; or
when a verification result indicates that the terminal device is not allowed to use the first user service, sending, to the terminal device, information indicating that the terminal device is not allowed to use the first user service.

13. The method according to claim 8, 9, or 12, wherein the sending a request message to a first network element comprises:
when determining that the identification information of the user service that is allowed to be used by the terminal device is not stored, sending the request message to the first network element.

14. The method according to any one of claims 8 to 13, wherein the sending a request message to a first network element comprises:
sending the request message to the first network element via a network exposure function network element or a multicast/broadcast service function network element.

15. The method according to any one of claims 8 to 14, wherein the first network element is a unified data management network element, an application function network element, or a multicast/broadcast service function network element.

16. A verification method, comprising:
receiving a request message from a multicast/broadcast service transport function network element, wherein the request message comprises identification information of a terminal device and identification information of a first user service, and the request message is used to request to verify whether to allow the terminal device to use the first user service;
verifying, based on the identification information of the first user service and identification information of a user service that is allowed to be used by the terminal device, whether to allow the terminal device to use the first user service; and
sending a verification result to the multicast/broadcast service transport function network element.

17. The method according to claim 16, wherein the verifying, based on the identification information of the first user service and identification information of a user service that is allowed to be used by the terminal device, whether to allow the terminal device to use the first user service comprises:
if the identification information of the user service that is allowed to be used by the terminal device comprises the identification information of the first user service, generating the verification result, wherein the verification result indicates that the terminal device is allowed to use the first user service; or
if the identification information of the user service that is allowed to be used by the terminal device does not comprise the identification information of the first user service, generating the verification result, wherein the verification result indicates that the terminal device is not allowed to use the first user service.

18. The method according to claim 16 or 17, wherein before the receiving a request message from a multicast/broadcast service transport function network element, the method further comprises:
receiving, from an application function network element, the identification information of the user service that is allowed to be used by the terminal device.

19. A verification method, comprising:
receiving, from an application function network element, identification information of a user service and identification information of a terminal device that is allowed to use the user service, wherein the user service is a multicast service;
receiving the identification information of the user service from a first terminal device; and
verifying, based on identification information of the first terminal device and the identification information of the terminal device that is allowed to use the user service, whether to allow the first terminal device to use the user service.

20. The method according to claim 19, wherein the verifying, based on identification information of the first terminal device and the identification information of the terminal device that is allowed to use the user service, whether to allow the first terminal device to use the user service comprises:
if the identification information of the terminal device that is allowed to use the user service comprises the identification information of the first terminal device, determining to allow the first terminal device to use the user service; or
if the identification information of the terminal device that is allowed to use the user service does not comprise the identification information of the first terminal device, determining not to allow the first terminal device to use the user service.

21. The method according to claim 19 or 20, wherein the verifying, based on identification information of the first terminal device and the identification information of the terminal device that is allowed to use the user service, whether to allow the first terminal device to use the user service comprises:
after an authentication parameter from the first terminal device passes authentication, verifying, based on the identification information of the first terminal device and the identification information of the terminal device that is allowed to use the user service, whether to allow the first terminal device to use the user service.

22. The method according to claim 21, wherein the method further comprises:
when the authentication parameter from the first terminal device passes the authentication, and the first terminal device is determined to be allowed to use the user service, sending, to the first terminal device, information indicating that the first terminal device is allowed to use the user service; or
when the authentication parameter from the first terminal device passes the authentication, and the first terminal device is determined not to be allowed to use the user service, sending, to the first terminal device, information indicating that the first terminal device is not allowed to use the user service.

23. The method according to claim 19 or 20, wherein the method further comprises:
when the first terminal device is determined to be allowed to use the user service, sending, to the first terminal device, information indicating that the first terminal device is allowed to use the user service; or
when the first terminal device is determined not to be allowed to use the user service, sending, to the first terminal device, information indicating that the first terminal device is not allowed to use the user service.

24. A verification method, comprising:
receiving identification information of a user service and a first token from a terminal device, wherein the user service is a multicast service;
obtaining one or more tokens corresponding to the identification information of the user service; and
verifying, based on the first token and the one or more tokens, whether to allow the terminal device to use the user service.

25. The method according to claim 24, wherein the verifying, based on the first token and the one or more tokens, whether to allow the terminal device to use the user service comprises:
if the one or more tokens comprise the first token, determining to allow the terminal device to use the user service; or
if the one or more tokens do not comprise the first token, determining not to allow the terminal device to use the user service.

26. The method according to claim 24 or 25, wherein before the receiving identification information of a user service and a first token from a terminal device, the method further comprises:
receiving, from an application function network element, a network exposure function network element, or a multicast/broadcast service function network element, the identification information of the user service and the one or more tokens corresponding to the identification information of the user service.

27. A communication apparatus, comprising a module configured to perform the method according to any one of claims 1 to 7, a module configured to perform the method according to any one of claims 8 to 15, a module configured to perform the method according to any one of claims 16 to 18, a module configured to perform the method according to any one of claims 19 to 23, or a module configured to perform the method according to any one of claims 24 to 26.

28. A communication apparatus, comprising a processor and a memory, wherein the memory is configured to store computer instructions, and when the communication apparatus runs, the processor executes the computer instructions, to enable the communication apparatus to perform the method according to any one of claims 1 to 26.

29. A communication system, comprising a multicast/broadcast service transport function network element configured to perform the method according to any one of claims 1 to 7, and a first network element configured to perform the method according to any one of claims 16 to 18.

30. A communication system, comprising a first network element and a multicast/broadcast service transport function network element configured to perform the method according to any one of claims 8 to 15, wherein
the first network element is configured to: receive a request message from the multicast/broadcast service transport function network element, wherein the request message comprises identification information of a terminal device, and the request message is used to request identification information of a user service that is allowed to be used by the terminal device; and send, to the multicast/broadcast service transport function network element, the identification information of the user service that is allowed to be used by the terminal device.

31. A communication system, comprising an application function network element and a multicast/broadcast service transport function network element configured to perform the method according to any one of claims 19 to 23, wherein
the application function network element is configured to send, to the multicast/broadcast service transport function network element, identification information of a user service and identification information of a terminal device that is allowed to use the user service, wherein the user service is a multicast service.

32. A computer-readable storage medium, wherein the storage medium stores a computer program or instructions, and when the computer program or the instructions are executed by a communication apparatus, the method according to any one of claims 1 to 26 is implemented.

33. A computer program product, comprising a computer program or instructions, wherein when the computer program or the instructions are run by a communication apparatus, the communication apparatus is enabled to perform the method according to any one of claims 1 to 26.

34. A verification method, comprising:
receiving, by a second network element, identification information of a first user service from a terminal device, wherein the first user service is a multicast service;
sending, by the second network element, a request message to a first network element, wherein the request message comprises identification information of the terminal device and the identification information of the first user service, and the request message is used to request to verify whether to allow the terminal device to use the first user service; and
sending, by the first network element, a verification result to the second network element, wherein the verification result indicates that the terminal device is allowed to use the first user service, or indicates that the terminal device is not allowed to use the first user service.

35. The method according to claim 34, wherein the method further comprises:
when the verification result indicates that the terminal device is allowed to use the first user service, sending, by the second network element to the terminal device, information indicating that the terminal device is allowed to use the first user service; or
when the verification result indicates that the terminal device is not allowed to use the first user service, sending, by the second network element to the terminal device, information indicating that the terminal device is not allowed to use the first user service.

36. The method according to claim 34 or 35, wherein the sending, by the second network element, a request message to a first network element comprises:
when determining that identification information of a user service that is allowed to be used by the terminal device is not stored, sending, by the second network element, the request message to the first network element.

37. The method according to any one of claims 34 to 36, wherein the sending, by the second network element, a request message to a first network element comprises:
sending, by the second network element, the request message to the first network element via a network exposure function network element or a multicast/broadcast service function network element.

38. The method according to any one of claims 34 to 37, wherein the first network element is a unified data management network element, an application function network element, or a multicast/broadcast service function network element.

39. The method according to any one of claims 34 to 38, wherein the method further comprises:
receiving, by the first network element, the request message;
verifying, by the first network element based on the identification information of the first user service and the identification information of the user service that is allowed to be used by the terminal device, whether to allow the terminal device to use the first user service; and
sending, by the first network element, the verification result to the second network element.

40. The method according to claim 39, wherein the sending, by the first network element, the verification result to the first network element comprises:
sending, by the first network element, the verification result to the second network element via the multicast/broadcast service function network element.

41. A verification method, comprising:
sending, by an application function network element, identification information of a user service and identification information of a terminal device that is allowed to use the user service, wherein the user service is a multicast service;
receiving, by a first network element from the application function network element, the identification information of the user service and the identification information of the terminal device that is allowed to use the user service;
receiving, by the first network element, the identification information of the user service from a first terminal device; and
verifying, by the first network element based on identification information of the first terminal device and the identification information of the terminal device that is allowed to use the user service, whether to allow the first terminal device to use the user service.
